# EUROPEAN PATENT APPLICATION

(11) **EP 0 889 173 A1**
(43) Date of publication of application: **07.01.1999**
(21) Application number: 97914643.8
(22) Date of filing: 24.03.1997
(51) Int. Cl.: E02D 3/10, E01B 37/00, E01C 11/16, E02D 29/02, E02B 3/06, E02B 15/00, E02B 15/06, E02D 29/00, E21D 11/10, B09B 1/00

(54) **REINFORCEMENT FRAME FOR STRUCTURES AND METHOD OF CONSTRUCTING BUILDING STRUCTURES UTILIZING THE SAME REINFORCEMENT FRAME**

(30) Priority: 23.03.1996 KR 9608016
(71) Applicant: Kim, Jong, Chun, Cheju-do 690-021 (KR)
(72) Inventor: Kim, Jong, Chun, Cheju-do 690-021 (KR)
(74) Representative: Cummings, Sean Patrick
(86) International application number: KR9700046
(87) International publication number: WO9736057

(57) **Abstract**

The present invention provides a reinforced frame for structures and a construction method of a building structure using same. The reinforced frame for structures of the present invention comprises basic plates and connection plates that are fastened with one another by connecting strings. Since the structure is prefabricated, it can be easily folded and assembled, and is easy to transport and convenient to use. Because the reinforced frame for structures of the present invention constitutes as a whole a large number of cells, it can be used not only for reinforcing a soft ground but also for constructing a front surface wall such as a retaining wall. The structure can provide a multipurpose structure to be used for a variety of application.

## Description

### BACKGROUND OF THE INVENTION

### FIELD OF THE INVENTION

The present invention relates to a reinforced frame for structures, and more particularly to a reinforced frame for structures which is composed of a large number of cells, and capable of being folded and assembled and a method of constructing building structures utilizing the reinforced frame.

Generally, a reinforced frame for structures of various methods has been used for reinforcing a soft ground or building a front surface wall such as a retaining wall or a dam. First, one example for a reinforced frame for structures used for reinforcing the soft ground are disclosed in Japanese patent laid-open application No. 58-106020. The conventional reinforced frame for structures in constructed by fastening at least two or more basic plates at a predetermined interval with synthetic resins or metal panels. When installing the conventional reinforced frame for structures, gaps between the structures should be extended to insert a filling material such as soil therein. However, it is difficult to obtain a desired space due to the force of its restitution, and also there are a lot of difficulties in construction.

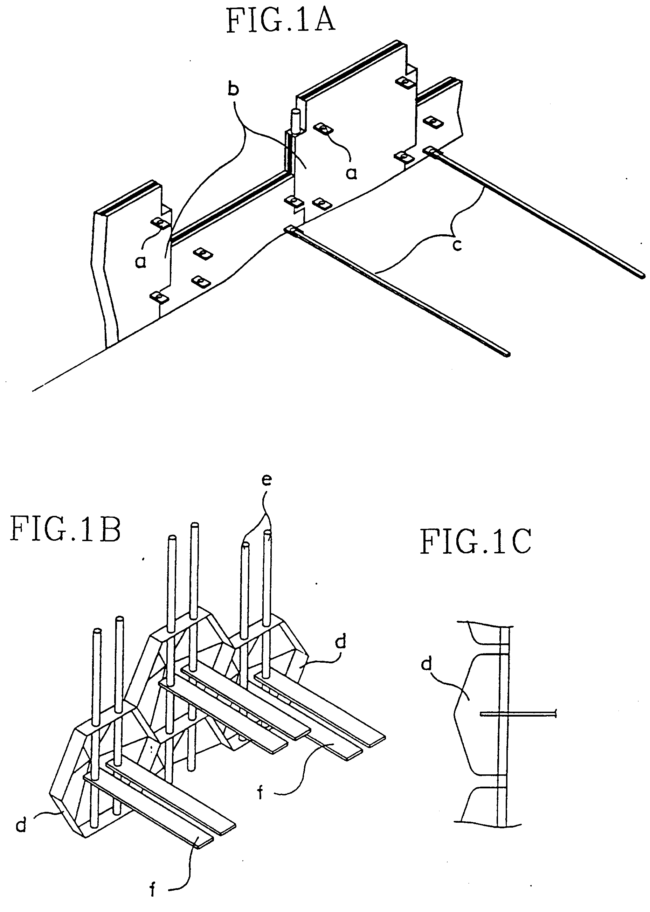

The conventional reinforced frame for structures used in building a front surface wall as a retaining wall is shown in Figs. 1A to 1C. Fig. 1A shows a method developed by Henry Vidal of French nationality. According to a method shown in the Fig. 1, a plurality of concrete plates (b) including reinforcement connection rings (a) protruded to an inner side are fabricated, reinforcement strips (c) join the reinforcement connection rings (a), and then a filling material such as soil is filled in the inner side thereof.

On the other hand, a method of Fig. 1B is developed in England, where unit members (d), each of a hexagonal shape, are closely stacked up. In order to maintain a solidity during the stack-up, the unit members (d) are connected with connection rods (e) passing therethrough, and the filling material such as soil is filled in the inner side by connecting reinforcement laces (f) to the connection rods (e). However, there is a problem in that the reinforcement laces (f) are drawn, and it is difficult to stack up beyond a predetermined height due to a structural weakness.

### SUMMARY OF THE INVENTION

The present invention is disclosed to solve the above problems, and it is an object of the present invention to provide a multipurpose reinforced frame for structures for use not only in reinforcing a soft ground but also in constructing a front surface wall such as a retaining wall.

It is another object of the present invention to provide a reinforced frame for structures of a cell shape capable of being easily folded and prefabricated.

It is still another object of the present invention to provide a reinforced frame for structures which is easy in installment and excellent in stability for construction of a high retaining wall.

In accordance with the above object of the present invention, where is provided a reinforced frame for structures, the comprising:
at least more than two basic plates including first holes through which first strings to pass;
connection plates including second holes through which the first strings to pass, being arranged at a predetermined interval between the basic plates; and
first strings passing through the first holes of the basic plates and the second holes of the connection plates for connecting the basic plates with the connection plates.

There is provided a reinforced frame for structures according to another aspect of the present invention, the comprising:
at least more then two basic plates composed of flexible material and engaged with one another at a predetermined interval; and
at least more than extension members arranged within empty spaces formed between the basic plates and the connection plates for extending the basic plates from the longitudinal direction to the side direction by the tension force.

There is provided a reinforced frame for structures according to still another aspect of the present invention, the frame including at least more than two basic plates having first connection grooves formed at a constant interval at the end of one side of the longitudinal direction, and first connection plates being engaged into the first connection grooves in an approximately orthogonal direction against the longitudinal direction of the basic plates, wherein the basic plates and/or the connection plates have openings.

There is provided a reinforced frame for structures according to still another aspect of the present invention, the comprising:
at least more than two basic plates including first connection grooves formed at a constant interval on the end of one side of the longitudinal direction, and second connection grooves formed at a predetermined interval from the first connection grooves downward;
first connection plates being engaged into the first connection grooves in an approximately orthogonal direction against the basic plate; and
second plates being inserted and fastened to the second connection grooves at a predetermined interval in the lower portion of the first connection plate.

There is provided a reinforced frame for structures according to still another aspect of the present invention, the frame comprising:
at least more than two basic plates extended longitudinally with a predetermined thickness including connection grooves formed on both sides thereof at a predetermined interval in the longitudinal direction; and
connection plates integrally forming engagement portions to be connected to the connection grooves on both sides thereof, wherein the engagement portions are connected to the connection grooves of the basic plates.

There is provided a reinforced frame for structures according to still yet another aspect of the present invention, the frame comprising:
at least more than one basic plates having connection grooves formed on both ends at a predetermined interval along the longitudinal directional; and
connection members being engaged between connection grooves opposing to each other on the basic plate.

In accordance with further objects of the present invention, there in provided a method constructing building structures utilizing the reinforced frame for structures, the method comprising the step of utilizing the frame as a panel, wherein cell spaces in the frame are filled with filling materials and are hardened thereby.

In accordance with still further object of the present invention, there is provided a method of constructing building structures utilizing the reinforced frame for structures, the method comprising the step of using the reinforced frame for structures as an inside framework of a building structure.

### BRIEF DESCRIPTION OF THE DRAWINGS

For fuller understanding of the nature and objects of the invention, reference should be made to the following detailed description taken in conjunction with the accompanying drawings in which:
Figs. 1A and 1B are perspective views of a reinforced frame for structure showing a front surface of a retaining wall according to a conventional art;
Fig. 2 is a perspective view of a reinforce frame for structures according to a first preferred embodiment of the present invention;
Fig. 3 is a perspective view of a reinforced frame for structures according to a second embodiment of the present invention;
Fig. 4 is a perspective view of a reinforced frame for structures according to a third embodiment of the present invention;
Fig. 5 is a plan view of a reinforced frame for structures according to a fourth embodiment of the present invention;
Fig. 6 is a plan view of a reinforced frame for structures according to a fifth embodiment of the present invention;
Figs. 7A to 7C are front views for showing parts of a reinforced frame for structures according to a sixth embodiment of the present invention;
Fig. 8 is a perspective view of a reinforced frame for structures with which the parts of Fig. 7 are connected according to the sixth embodiment;
Fig. 9 is a perspective view of a reinforced frame for structures according to a seventh embodiment of the present invention;
Figs. 10A to 10C are perspective view showing parts of a reinforced frame for structures according to an eighth embodiment of the present invention;
Fig. 11 is a plan view showing a state where the parts of Fig. 10 according to the eight embodiment are connected with one another;
Fig. 12 is a perspective view of a reinforced frame for structures according to a ninth embodiment of the present invention;
Fig. 13 is a plan view for illustrating one embodiment with regard to a construction method of a reinforced frame for structures according to the present invention;
Fig. 14 is a plan view showing another embodiment of Fig. 13;
Fig. 15 is a perspective view of Fig. 14;
Fig. 16 is a lateral view of the Fig. 15 showing a state where filling materials are filled in each cell;
Fig. 17 is a view for illustrating connection portions of the reinforced frame for structures shown in Fig. 15;
Fig. 18 is a sectional view for illustrating a fist construction example used in an improved construction work of soft ground utilizing a reinforced frame according to the present invention;
Figs. 18A, 18B and 18C are detailed drawings of various embodiments of "I" portion in Fig. 18;
Fig. 19 is a sectional view for illustrating a second construction example used in an improved construction work of soft ground according to a solidifying process utilizing a reinforced frame of the present invention;
Fig. 19A is a detailed drawing of a part in Fig. 19;
Fig. 20 is a plan view of a partly solidified structure by mixing solidified earth layer and drainage layer;
Fig. 21 is a sectional view of a solidified structure formed with a solidified earth layer at a lower section and a drainage layer at an upper section;
Fig. 22 is a perspective view of a solidified structure formed with a latticed drainer at a solidified earth layer;
Fig. 23 is a perspective view of another solidified structure formed with a drainage layer at an upper section of the solidified earth layer;
Fig. 24 is a sectional view for illustrating a third construction example of a waste reclaimed land utilizing a reinforced frame according to the present invention;
Fig. 25 is a sectional view for illustrating a fourth construction example of a retaining wall structure utilizing a reinforced frame according to the present invention;
Fig. 25A is a detailed showing of a part in Fig. 25;
Figs. 26A and 26B are sectional views for illustrating a fifth construction example of another retaining wall utilizing a reinforced frame according to the present invention;
Fig. 27 is a sectional view for illustrating a sixth construction example of a tunnel structure utilizing a reinforced frame according to the present invention;
Fig. 28 is a sectional view for illustrating a seventh construction example of an underground structure utilizing a reinforced frame according to the present invention;
Fig. 28A is an exemplary drawing for illustrating a drained relation of an underground structure;
Fig. 28B is a partial detailed drawing for illustrating a drained structure of an underground structure;
Fig. 29A and 29B are perspective views for illustrating an eighth construction example of a roadbed structure utilizing a reinforced frame according to the present invention;
Fig. 30 is a perspective view for illustrating a ninth construction example of piping structure utilizing a reinforced frame according to the present invention;
Fig. 30A is a perspective view of another piping structure;
Fig. 31 is a side view for illustrating a tenth construction example of a cushioning structure utilizing a reinforced frame according to the present invention;
Fig. 32 is a perspective view for illustrating an eleventh construction example of a support structure for a piped waterway utilizing a reinforced frame according to the present invention;
Fig. 33 is a perspective view for illustrating a twelfth construction example of an embankment structure utilizing a reinforced frame according to the present invention;
Fig. 33A is an exemplary drawing for illustrating a state where an upper surface in Figure 33 is processed;
Fig. 34 is a perspective view of another embodiment structure;
Fig. 34A is a plan view for illustrating a state where a watergate of the embodiment structure in Fig. 34 is opened;
Fig. 34B is a plan view for illustrating a state where a watergate of the embodiment structure in Fig. 34 is closed;
Fig. 35 is a perspective view for illustrating a thirteenth construction example of a marine floating structure utilizing a reinforced frame according to the present invention;
Fig. 35A is a perspective view for illustrating an inner structure of the marine floating structure in Fig. 35;
Fig. 36 is a plan view for illustrating a fourteenth construction example of an oil fence structure utilizing a reinforced frame according to the present invention;
Fig. 36A is a partial perspective view of the oil fence structure in Fig. 36; and
Fig. 36B is a side sectional view of the oil fence structure in Fig. 36.

### DETAILED DESCRIPTION OF THE INVENTION

A preferred embodiment of the present invention will be described below in more detail with reference to the accompanying drawings.

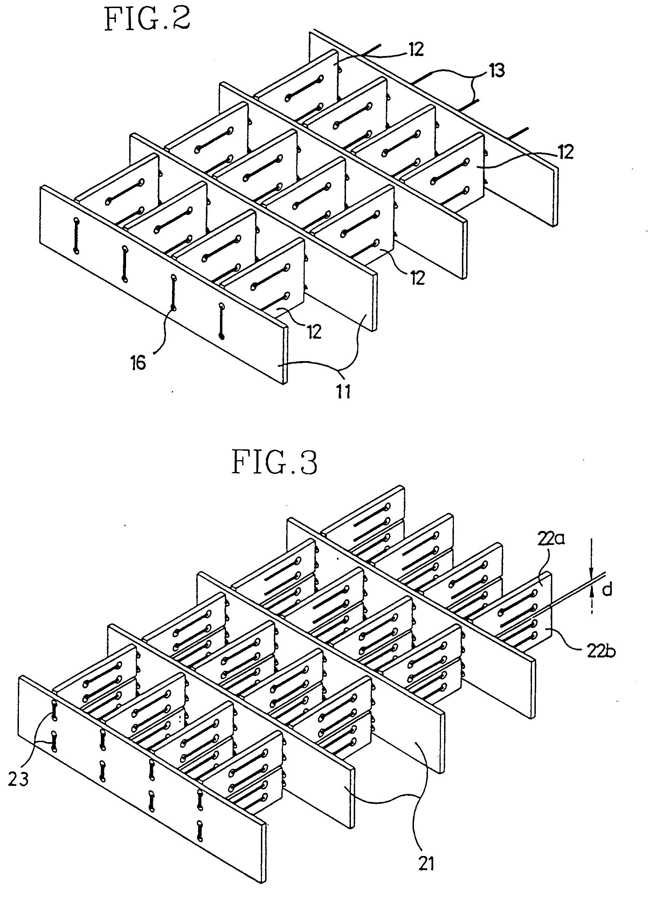

Fig. 2 is a perspective view of a reinforced frame for structures according to a first preferred embodiment of the present invention.

The reinforced frame for structure of the embodiment includes at least more than two basic plates 11, a plurality of connection plates 12, and strings 13 for connecting the basic plates 11 and the connection plates 12. A plurality of holes through which the strings 13 pass are formed in the basic plates 11 and the connection plates 12. As shown, the strings 13 pass through the basic plates 11 and the connection plates 12 to make the plates joined with each other, thereby forming the reinforced frame for structures in a cell shape. Here, the connection plate 12 may be modified in size so that an empty space to be formed between the basic plates 11 and the connection plates 12 is changed according to the purpose of construction.

Since the above reinforced frame for structures maintains strings 13 to be loose during transportation the structure becomes volumed by rotating the connection plates 13. While in construction the structure can be restored to the original shape by pulling the strings 13 as shown in Fig. 2. Accordingly, the structure provides an advantage of easiness in construction and enhancement of solidity. Furthermore, since the reinforced frame for structures of the present invention is constituted of a large number of cells, it provide an advantage in that any selected lattices can be used as a drain path if necessary.

The reinforced frame for structures can be used only for reinforcing the ground by charging a filling material such as soil in a number of lattices but also for forming a front surface wall such as a retaining wall be pilling-up.

Fig. 3 is a perspective view of the reinforced frame for structures according to a second embodiment of the present invention. This embodiment is basically the same as that of Fig. 2. However, this is distinguished from the Fig. 1 embodiment in view of connecting upper connection plates 22a and lower connection plates 22b, having a predetermined gap (d) therebetween. The reason to keep the gap (d) is to absorb and disperse an impact or load pressed from the vertical. Since other functions and effects are the same as the Fig. 2 embodiment, detailed description will be omitted.

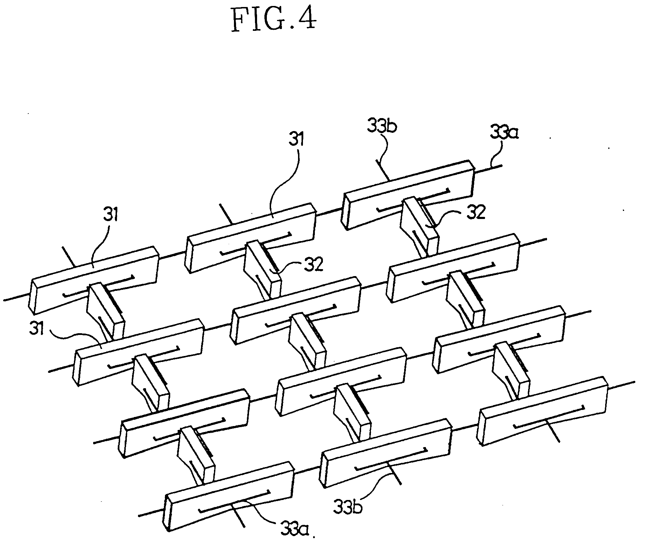

Fig. 4 is a perspective view of the reinforced frame for structures according to a third embodiment of the present invention. This embodiment comprises a plurality of unit plates 31, a plurality of connection plates 32 arranged in an approximately orthogonal direction between the unit plates 31 opposing to each other, first strings 33a for connecting the unit plates 31, and second strings 33b for connecting the unit plates 31 with the connection plates 32. As shown in Fig. 4, the unit plates 31 include holes through which the first strings 33a and the second strings 33b pass. The connection plates 33 includes holes through which the second strings 33b.

There is an advantage in this embodiment in that it can be applied to a twisted ground, slant surface, rock-floor area, and a place where smoothing work cannot be performed. Since the advantage, function and effect are the same as those of the first and second embodiments, further description will not be made redundantly.

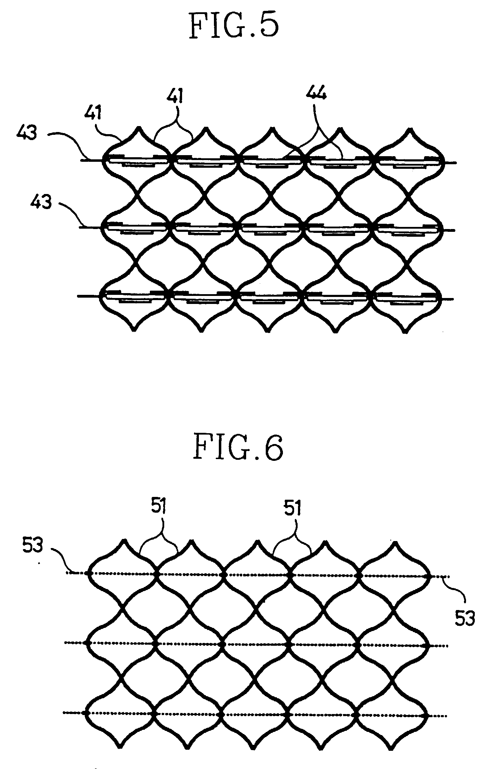

Fig. 5 is a plan view of the reinforced frame for structures according to a fourth embodiment of the present invention. The reinforced frame for structures of this embodiment includes a plurality of flattened basic plates 41 extended in the longitudinal direction. The basic plates 41 are composed of resins or metals, adjacent plates 41 of which are joined with each other at a predetermined interval into longitudinal direction. When the basic plates 41 are extended into the vertical direction against the longitudinal direction, a large number of empty spaces are formed as shown in Fig. 5.

A plurality of extension members are arranged in the empty spaces between the basic plates 41. Each extension member consists of an extension plate 44 which is disposed in each space of the basic plates 41, and strings 43 for connecting the extension plate 44 with the basic plate 41. The string 43 passes through holes (not shown) formed at the sides of the basic plates 41 and holes (not shown) formed at the extension plates 44 to thereby connect the extension plates 44 to the basic plates 41.

Accordingly, since the strings 43 become loose during transportation of the structure, the extension plates 44 rotate at approximately 90 degrees to have the basic plates 41 closely arranged by an elastic force of the basic plates 41, thereby minimizing the volume. In construction, the reinforced frame for structures of the present invention can be installed in the same shape as shown in Fig. 5 by pulling the strings 43 from both ends thereof. In this state, the material such as soil is put in the structure to thereby complete the construction. Other functions and effects can be easily understood as per previous embodiments.

Fig. 6 is a plan view of the reinforced frame for structures according to a fifth embodiment of the present invention. Construction of this embodiment is basically the same as that of Fig. 5 with the exception of having no extension plates 44. This embodiment includes strings 53 which are positioned between the connection plates of the basic plate 41, having a predetermined length, both ends of which are fastened to the connection plates. The strings 53 should be made of a flexible material capable of being folded, and thus this embodiment has the same effect in construction and transportation as that of the Fig. 5 embodiment.

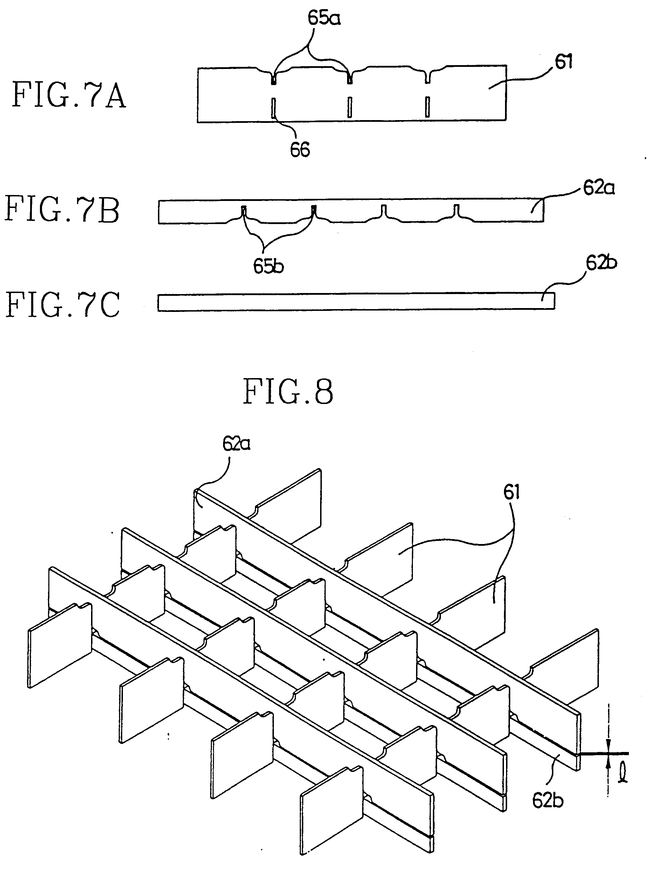

Figs. 7A to 7C are front views showing parts of the reinforced frame for structures according to a sixth embodiment of the present invention. Fig. 7A shows a basic plate 61, Fig. 7B a first connection plate 62a, and Fig. 7C a second connection plate 62b, respectively. The basic plate 61 of a long thin flat piece includes first connection grooves 65a formed at a predetermined interval on one end of its upper side along the longitudinal direction. Also, the basic plate 61 includes slots 66 formed at a predetermined interval straight downward from the first connection grooves 65a.

The first connection plate 62a includes second connection grooves 65b to be engaged with the first connection grooves 65a of the basic plate 61. The first connection plate 62a is joined lengthwise in an approximately orthogonal direction to the basic plate 61. The second connection plate 62b is a flat piece which can be inserted into the slots 66.

Fig. 8 is a perspective view of a reinforce frame for structures with which parts of Figs. 7A, 7B and 7C are connected according to the sixth embodiment. As described in Figs. 7A to 7C, the first connection grooves 65a of the basic plate 61 are oppositely engaged with the second connection grooves 65b of the first connection plate 62b, and then the second connection plate 62b is inserted into the slots 66 of the basic plate 61 and connected therewith. At this time, it is preferable that opposite ends between the first connection plate 62a and the second connection plate 62b are kept apart at a predetermined interval (ℓ) in order to absorb and disperse an impact or load pressed from the vertical. Since other functions and effects are the same as those of the previous embodiments, detailed description will be omitted.

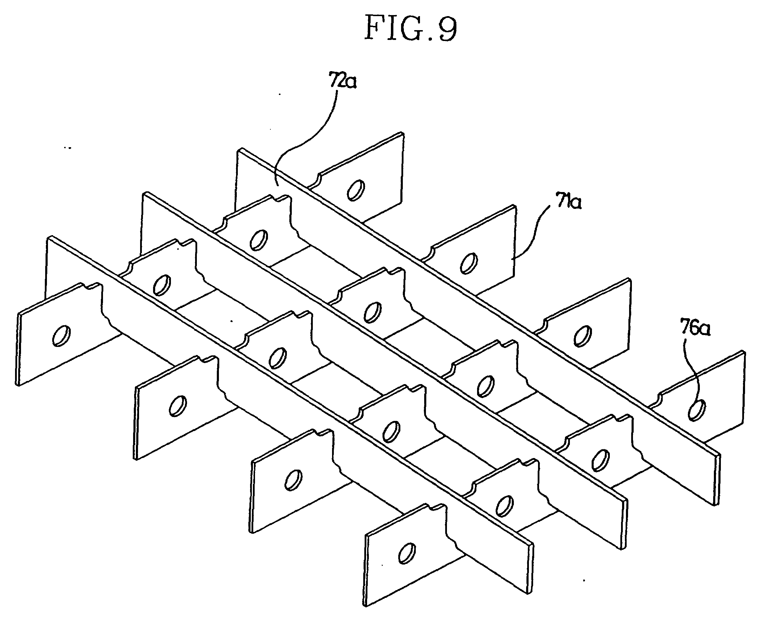

Fig. 9 is a perspective view of the reinforced frame for structures according to a seventh embodiment of the present invention. The reinforced frame for structures of this embodiment is basically similar to that of the Fig. 8 embodiment. However, the embodiment is characterized by the fact that a plurality of holes 76 are formed on the basic plate 61 by removing the second connection plate 62b. according to removal of the second connection plate 62b, the slots 66 of the basic plate 61 can be used as a drain path, with no separate space installed for draining. The reason that the plurality of holes 76 are formed on the basic plate 61 is to enhance durability since bot ends thereof are fastened to each other, in case of charging a filling material such as cement and the like.

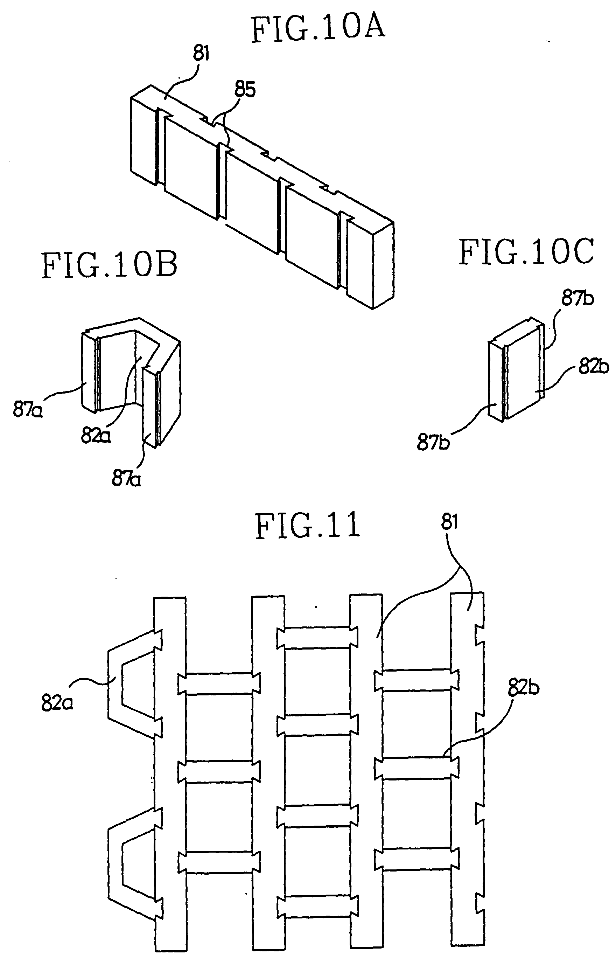

Figs. 10A to 10C are perspective views showing parts of the reinforced frame for structures according to an eighth embodiment of the present invention. Fig. 10A shows a long basic plate 81 having a predetermined thickness. The basic plate 81 includes connection grooves 85 formed at both sides thereof at a predetermined interval in the longitudinal direction. Fig. 10B shows a front connection plate 82a for installing at a front surface of the reinforced frame for structures, at both sides of which first engagement portions 87a are formed for engaging with the connection grooves 85 of the basic plate 81. Fig. 10C shows a middle connection plate 82b which is so connected as to obtain a cell-shaped space between the basic plates 81. The middle connection plate 82b includes second engagement portions 87b for connecting with the connection grooves 85 of the basic plate 81.

Fig. 11 is a plan view showing a state where parts of Fig. 10 according to the eighth embodiment are connected with one another. The reinforced frame for structures of the present invention uses thick reinforced concrete, metal plates or other rigid materials, and is suitable for installing a front surface wall of a structure as it is heaped up in the multi-layered fashion. Even though description on the prefabrication and use of the reinforced frame for structures in omitted hereinafter, it can be fully understood from the above. When the reinforced frame for structures is applied to construction at the sea or waterway, filling materials can be filled into respective inner cells on the spot where a traffic road is installed on the upper portion of the basing plates 81 after heaping up the structures. Also, the structure of this embodiment can be fabricated in one united body, not combination of separate parts.

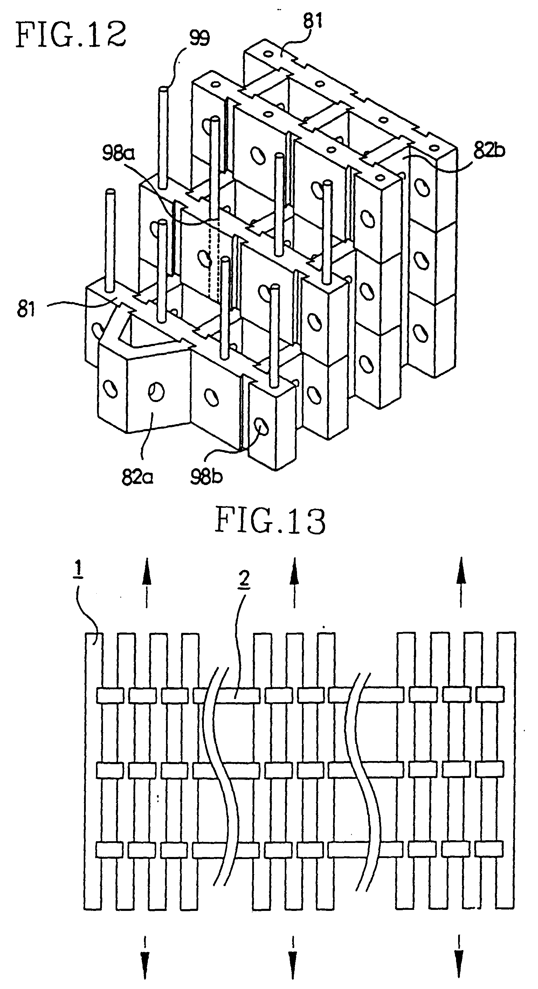

Fig. 12 is a perspective view of the reinforced frame for structures according to a ninth embodiment of the present invention. This embodiment shows a state where the reinforced frames for structures of Fig. 10 are multifold piled up. Accordingly, elements which perform the same functions as these of Fig. 10 are designated with the same reference numerals. As shown in Fig. 12, in order to make the heaped-up structures solid, the basic plate 81 includes a plurality of holes 98a which pass through the upper and lower areas of the basic plate 81. Accordingly, when the structures are heaped up, connection rods 99 pierce the holes 98a. Also, the basic plates 81, front connecting plates 82a and middle connection plates 82b include opening 98b. When the structure is installed in a condition that the front surface wall is heaped up stepwise, it provides effects of the stability to the structure and cut-off of the wave. Moreover, since various types of draining spaces with a plurality of openings 98b are provided, this embodiment can reduce the pressure of the seawater by inducing the influx of the seawater up to a predetermined distance of the inside of the front surface plates, thereby providing advantages of high durability and stability of the structure.

Fig. 13 is a conceptual view for illustrating one embodiment with regard to a construction method of the reinforced frame for structures according to the present invention. As sown in Fig. 13, the length of a basic plate 1 and a connection plate 2 can be varied to offer various construction methods. Furthermore, the reinforced frame for structures of the present invention can omit the process for installing or removing a mould as a wall surface has been already formed.

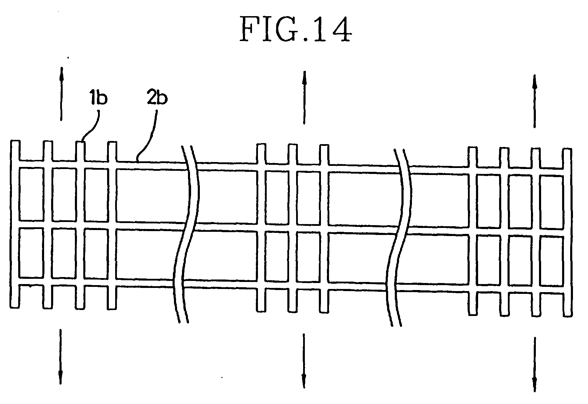

Fig. 14 is a plan view for showing another embodiment of Fig. 13. In this embodiment, horizontal members 2b and vertical members 1b are integrally formed. Heights of the horizontal members 2b and the vertical members 1b can be selectively adjusted. Also, the members 2b and 1b include holes (not shown), both ends of which are penetrated.

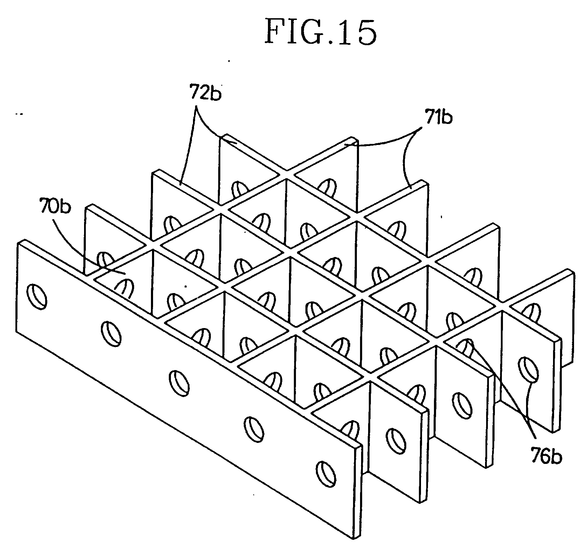

Fig. 15 is a perspective view of Fig. 14. The embodiment shows that horizontal members 72b and vertical members 71b are integrally disposed to form a plurality of cells 910. The horizontal members 72b and the vertical members 71b include a large number of holes 76b.

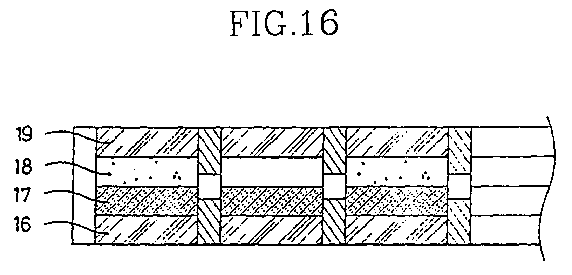

Fig. 16 is a lateral view of the embodiment in Fig. 15 for showing a state where various filling materials are packed in each cell. Different kinds of filling materials are filled in the inside of the structure. As shown, filling materials such as cement 16, rubber 17, gravel 18 and cement 19 are filled in order from the lower to the upper end. Here, the portion filled with the gravel 18 may have an empty space.

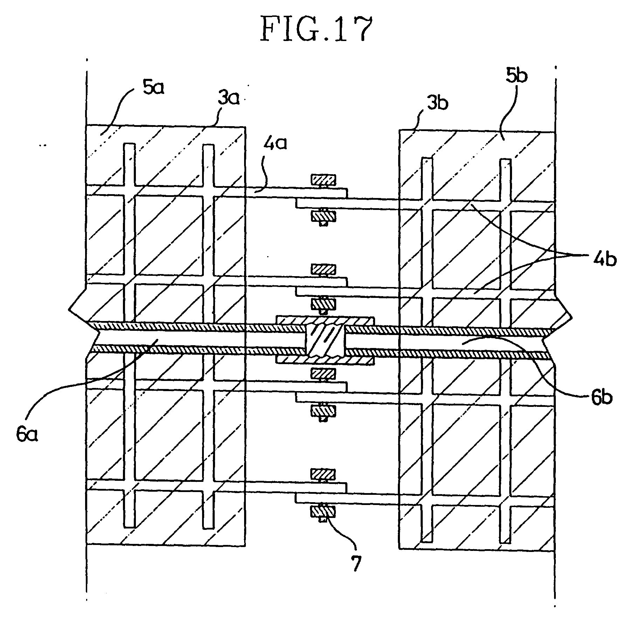

Fig. 17 is a view for illustrating a construction of connecting unit panels of the embodiment in Fig. 15. As shown, horizontal members (4a, 4b) are protruded on a connection portion of respective unit panels (3a, 3b) and cells (5a, 5b) are filled with filling materials. Drain members (6a, 6b) are projected in the filling materials according to the connection direction of the unit panels (3a, 3b). the drain members (6a, 6b) are fabricated to pass therethrough when the unit panels are connected with each other. When respective unit panels (3a, 3b) are connected with each other, the projected horizontal members (4a, 4b) and/or drain members (6a, 6b) are engaged by an engagement member 7 such as a bolt. All of the horizontal members can be connected with a single engagement member.

As described above, the reinforced frame for structures of the present invention can be applied to various fields as described in other embodiments as well as for reinforcing a soft ground, stabilizing a sand surface, and constructing a dam and embankment.

Now, hereunder, technical composition and operational effects will be described in detail, utilizing the reinforced frame for structures of the present invention that is used for improvement construction of a soft ground, waste reclaimed land retaining wall structure, tunnel structure, underground structure, roadbed structure, draining structure, cushioning structure, piped waterway supporting structure, embankment structure, marine floating structure, oil fence and the like.

### (Construction example 1) reinforced frame for drain path in improvement construction for a soft ground

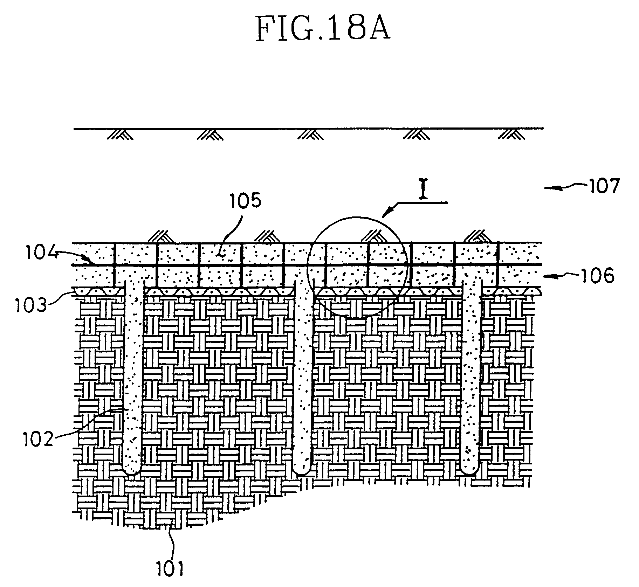

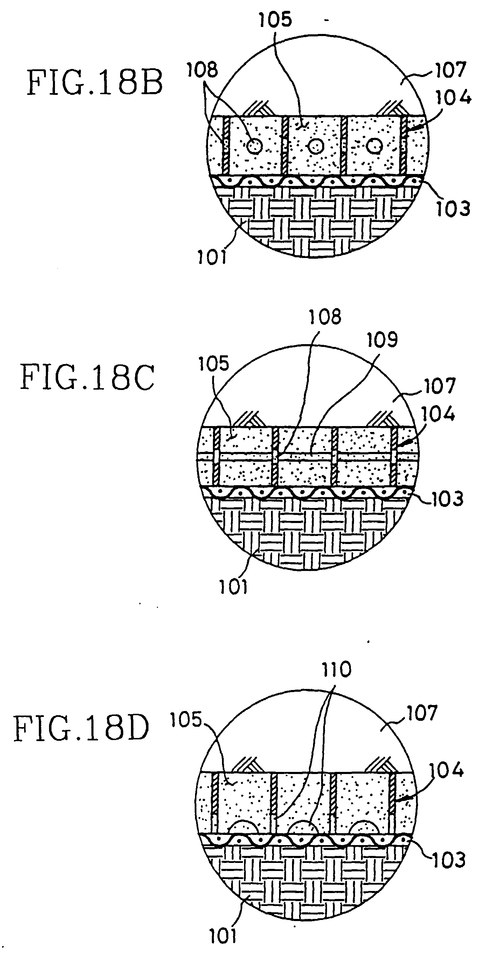

Fig. 18 is a sectional view for illustrating a construction example used in drain path of improved construction for a soft ground according to the reinforced frame for structures of the present invention.

In the case where the improved construction of soft ground is performed according to the reinforced frame for structure of the present invention, a nonwaven fabric mat 103 is prepared on an upper surface of the soft ground 101 to thereby form a water-deterring curtain and an upper drain path (sand mat layer) of the nonwaven fabric mat 103 is mounted by the reinforced frame 104 of the present invention and is filled with sands. A drain is installed to allow the ground to be improved by the weight of the layer soil.

Here, as illustrated in Figs. 18A, 18B and 18C, the reinforced frame 104 is a basic plate or connection plate formed with through holes 108, vertical interval 109 or holes 110.

As described herein, the reinforced frame 104 of the present invention used for the chain path in the improvement construction of soft ground serves to effectively disperse various loads pressed from upped areas, thereby providing a traffic road to various heavy equipments, effectively dispersing various loads transmitted from the layed soil heaped thereon and smoothly draining the water coming from sand piles 102 through holes 108 or the vertical interval 109.

Accordingly, there is an advantage in the of load-dispersing sole performed by the reinforced frame of the present invention in that a traffic road of weak ground is provided and height of layed soil 107 is lowered to thereby reduce construction cost and period.

### (Construction example 2) forming construction of solidified layed utilizing the reinforced frame

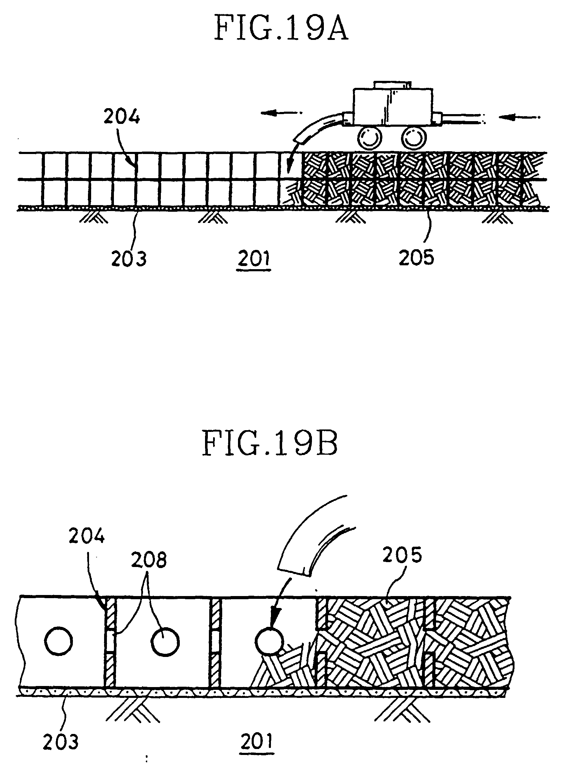

Fig. 19 is a sectional view for illustrating a construction example used in an improved construction work of soft ground according to solidifying process of earth and sand utilizing a reinforced frame of the present invention.

In the case of solidifying process method utilizing the reinforced frame according to the present invent, a nonwaven fabric mat 203 is installed on and upper area of the weak ground, as illustrated in Fig. 19, a reinforced frame 204 is mounted thereon. Then, chemical agent for solidifying process, sand and earth are uniformly mixed by an agitator to be sprayed into cells of the reinforced frame 204 by way of pump and equipment, whereby processes for forming a solidified soil layed 205 is performed.

Here, the reinforced frame 204 comprises a basic plate or a connection plate formed with through holes 208, as illustrated in Fig. 19. Furthermore, the reinforced frame 204 may be the one formed with vertical interval or through grooves as illustrated in Fig. 18B and 18C.

The solidified soil layer 205 is integrally fixed by the reinforced frame 204 via the through hole 208, vertical interval or through grooves. The solidified soil layer 205 thus formed serves to disperse a large load concentrated to a certain portion to the whole area of the reinforced frame 204, thereby preventing partial breakage and uniformly improving a supporting force of the weak ground to the advantage of prevention an irregular subsidence of the soft ground.

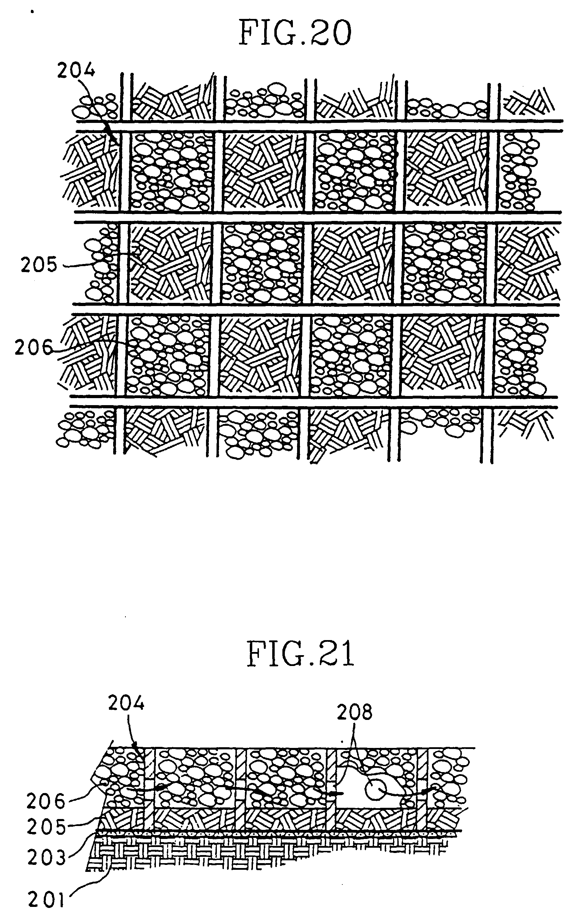

Meanwhile, Fig. 20 is an exemplary drawing of partially solidified structure where the solidified soil layer 205 is formed only in part of the cells of the reinforced frame 204 while other part of the cells are formed with granular aggregates such as gravel and the like capable of ventilation and draining.

This kind of partially solidified processing method enables the air and moisture to circulate through a drainage layer 206 formed at part of the cells, so that there is an advantage of solving an environmental disruption caused by a solidifying process according to the conventional installment(pouring-in) method.

Fig. 21 is an exemplary drawing for illustrating a structure where a reinforced frame 204 is formed at a lower section thereby with the solidified soil layer 205 and is arranged at an upper section thereby with a drainage layer 206 filled with granular aggregates such as gravel and the like for easy ventilation and draining, thereby enabling a sedimental water of wastes to be drained out.

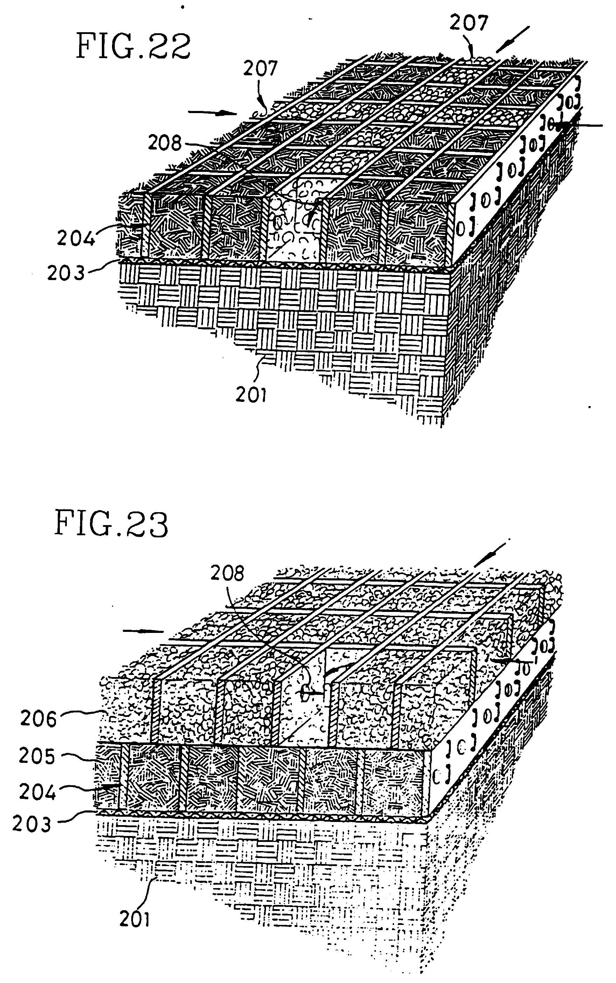

In the solidified structure thus described which enables a drainage, as illustrated Fig. 22, part of the solidified soil layer 205 is filled with granular aggregates of easy ventilation and drainage in lattice shape to form a drain path 207, and as illustrated in Fig. 23, a reinforced frame 204 in more than two tiers may be utilized, where a lower section thereof is integrally formed with a solidified soil layer 205 and an upper section thereof is provided with a drainage layer 206.

### (Construction example 3) front wall constructing method of reclaimed land of wastes

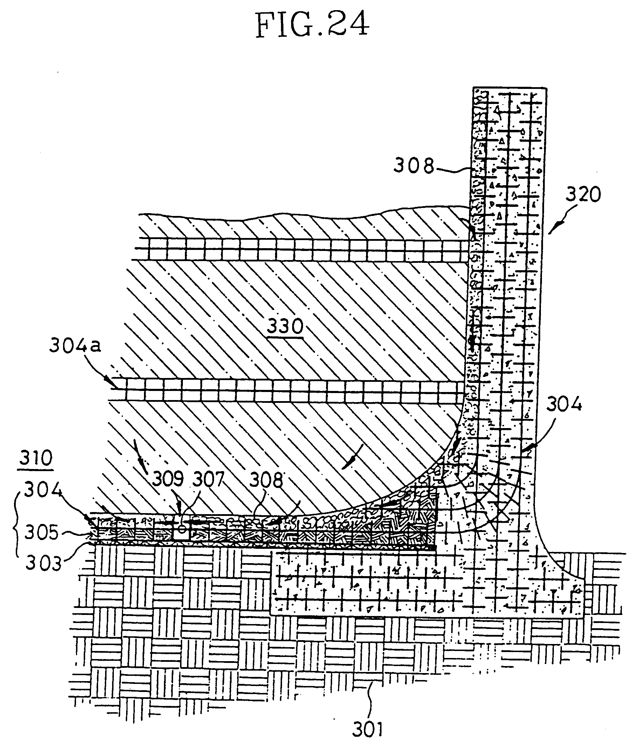

Fig. 24 is an exemplary drawing for illustrating a reinforced frame utilized for construction of a reclaimed land of wastes.

A floor plate 310 of a reclaimed land of wastes utilizing a reinforced frame according to the present invention is, as illustrated in Fig. 24, laid with a nonwoven fabric mat 303 on a surface of the ground 301 of the reclaimed land of excavated wastes, and in provided thereon with a reinforced frame 304 to thereby form a cut-off structure.

As described above, the floor plate 310 consisting of the nonwoven fabric mat 303, reinforced frame 304 and the solidified soil layer 305 serves to disperse to all directions a huge amount of concentrated load applied to a predetermined portion thereof through the reinforced frame 304 to effectively prevent partial sinking and breakdown of the ground.

Meanwhile, as illustrated in Fig. 24, when a reinforced frame 304a is fabricated in a middle layer for filling the wastes 330 to thereby allow weight of the wastes 330 laid thereon to be dispersed, more wastes can be filled in the increased layers thereof.

Furthermore, the ground plate 310 is adivisable to the formed at the upper section of the solidified soil layer 304 with a drain path 308 filled with granular aggregates such as gravel capable of ventilation, thereby enabling a drain-out of sedimentary water or effluence.

The drain path 308 filled with water-fugitive granular aggregates allows sedimentary water of wastes to penetrate into the ground via the ground plate 310 to prevent contamination of underground water because the drain path 308 helps the sedimentary water(effluence) extracted from the wastes piled thereon to be easily drained out. The drain path 308 also prevents disruption of structural stability of reclaimed land due to water pressure generated therein by the effluence.

Fig. 24 is an exemplary drawing for illustrating a reclaimed land of wastes where aggregates of reinforced frame are all integrally joined and connected at the floor plate 310 and front wall 320. The reinforced frames 304 of the front wall according to the construction example illustrated in Fig. 24 are arranged in parallel, part of which is integrally connected to a reinforced frame 304 of the floor plate 310 and other part of which forms a framework of the reclaimed land in a structure jutted out at a right angle toward a horizontal reinforced frame.

The aggregate unit of the reclaimed land for the wastes is integrally formed in the floor plate 310 and in the front wall 320, to thereby prevent the front wall 320 from falling down or being pushed outside due to wastes 330 being reclaimed.

Particularly, the reinforced frame 304 of front wall 320 is formed with a drain path 308 filled with water-fugitive granular aggregates such as gravel and the like to enable a vertical drainage of the effluence and the reinforced frame 304 is filled at an outside row thereof with concrete to thereafter be hardened.

Meanwhile, drain paths 308 formed at the floor plate 310 and the front wall 320 collect the effluence to a collection well 309 to allow same to be drained out of the reclaimed land through a drain passage 307

### (Construct example 4) retaining wall structure

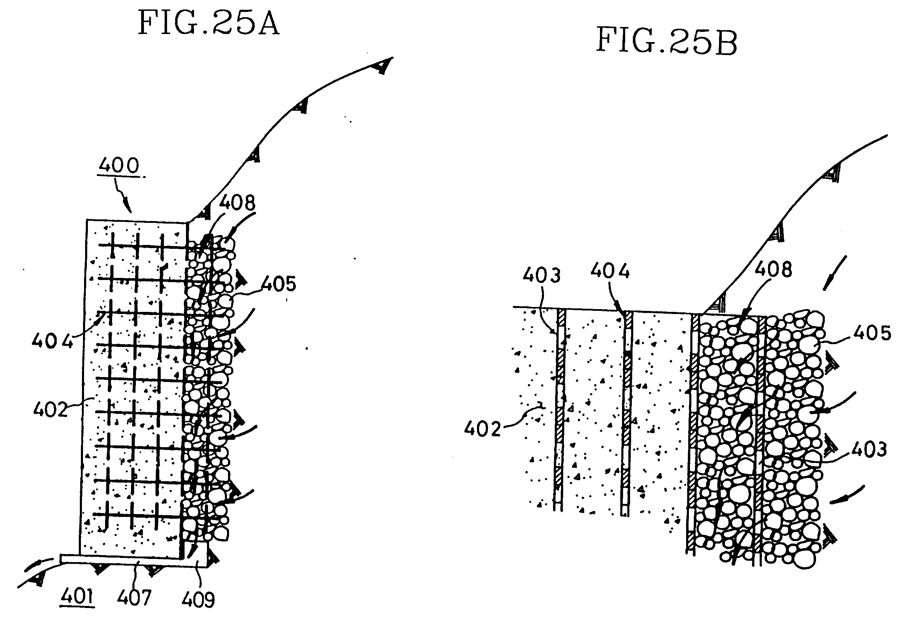

Fig. 25 is an exemplary drawing of a reinforced frame used for a retaining wall structure according to the present invention.

In the case of a retaining wall 400 according to the construction example illustrated in Fig. 25, an aggregate unit is constructed by erecting a reinforced frame 404 in multiple rows on a ground 401, and the reinforced frame 404 is filled at an extreme inner side thereof which contacts earth and sand with granular aggregates such as gravel and the like to form a drain path 407. The reinforced frame 404 is exemplified to have a construction where its outside is filled with concrete 402 and hardened thereafter.

Here, the reinforced frame 404 is formed, as illustrated in Fig. 25, with a basic plate or a connection plate having a through hole 403. Furthermore, the reinforced frame 404 may be formed with a vertical interval or through grooves. In the case of the retaining wall structure 400 thus constructed, water eluted from the underground or from surface layer of the soil is smoothly drained via the drain path 408 formed therein such that an inner water pressure generated from the retaining wall structure can be fundamentally prevented.

The drain path 408 is provided with a drain outlet 409, as illustrated Fig. 25. The drain outlet 409 is constructed such that it can be guided outside through a drain passage 407 to further allow the eluted water to be smoothly discharged.

### (Construction example 5) another construction example of retaining wall structure

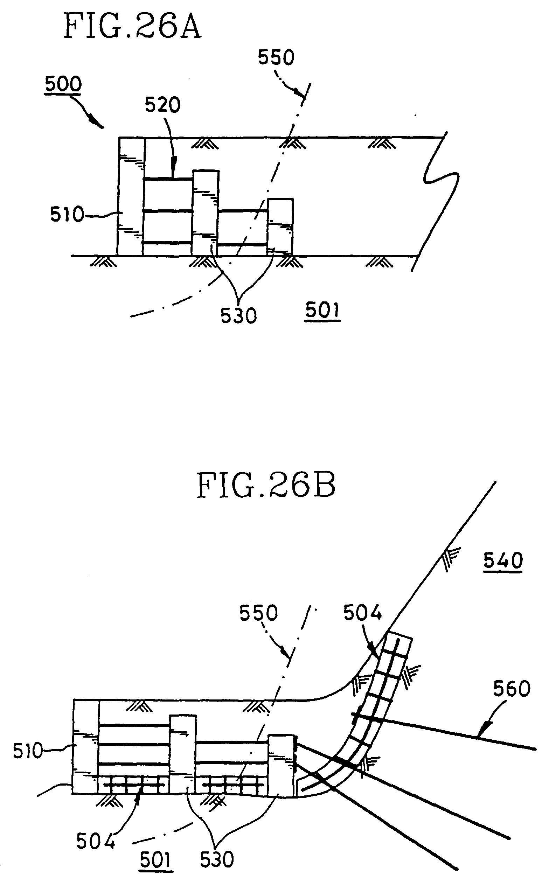

Figs. 26A and 26B are sectional views for illustrating another construction example of a retaining wall structure. The retaining wall structure according to the present construction example includes, as illustrated in Figs. 26A and 26B, an outside structural wall 510 erected at an extreme left side, a support structural unit 530 erected at a predetermined space toward an inner side of the outside structural wall 510, and connecting means 520 for mutually connecting the outside structural wall 510 and the support structural unit 530. The connecting means 520 may be selectively a connecting steel wire, a connecting support frame or a connecting plate.

The retaining wall structure is fabricated, as illustrated Fig. 26A, with the outside structural wall 510 erected outside of a destruction curve 550 with a wide upper width, and more than one support structural unit 530 erected inside of the destruction curve 550.

Subsequently, the outside structural wall 510 is connected to the support structural unit 530 by way of the connecting means 520 to thereby be solidly supported without being destroyed along the destruction curve 550.

In the case of the retaining wall structure 500 thus described, the support structural unit 530 is fabricated in reinforced frame 504 and as illustrated in Fig. 26B, through a technical construction supported by an anchor 560 in the underground, the support structural unit 530 may further increase a support force of the retaining wall structure 500. Here, part of the support structural unit 530 is located to be lying along a slant surface 540, as illustrated in Fig. 26B, and when the anchor 560 is attached thereto, the support force may be maximized.

### (Construction example 6) tunnel structure

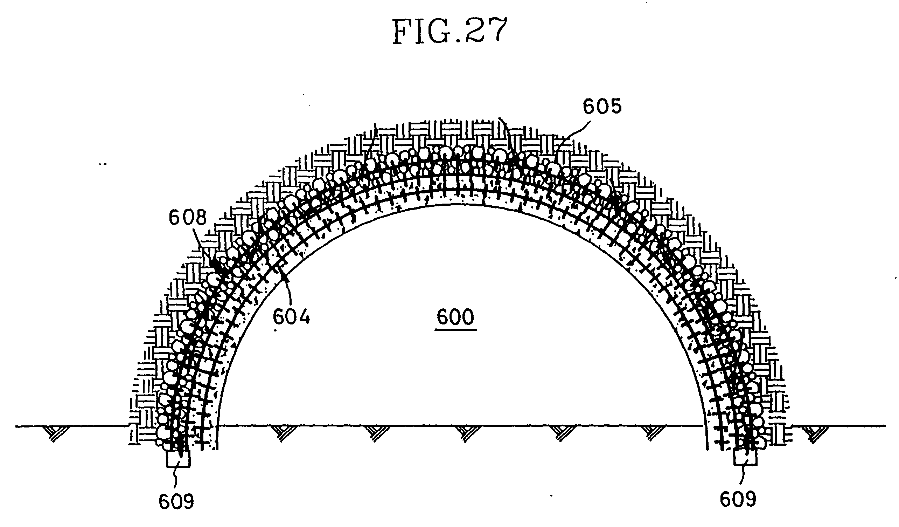

Fig. 27 is a drawing for illustrating a construction example where a reinforced frame is applied to a tunnel structure. The tunnel structure is fabricated by reinforced frames 604 arranged in plurality at an inside of a tunnel to be excavated to thereby form a framework, and an extreme outside of the reinforced frame 604 contacting earth and sand is filled therein with water-permissible granular aggregates such as reinforcing material or gravel to thereby form a chain path 608. The tunnel structure is filled therein at the reinforced frame 604 with concrete to allow it to be hardened thereafter. The drain path is to have a technical construction of being disposed with a drainer 609. Here, the reinforced frame 604 is advisable to have a basic plate, or a connection plate equipped with through holes, vertical intervals or through grooves.

Furthermore, in the case of constructing the tunnel structure, an adhesive force of filling materials is enhanced by an air-permissible structure and a wall surface of cells of the filling materials according to structure of reinforced frame 604 comprising independent cells, thereby reducing waste of materials resulting from injection.

The tunnel structure thus described is wholly and solidly connected by the reinforced frame 604, such that it is structurally stabilized and, because underground water eluting from inside of the tunnel through the drain path 608 and drainer 609 is smoothly discharged, soil pressure or water pressure applied to the tunnel structure can be alleviated.

### (Construction example 7) underground structure

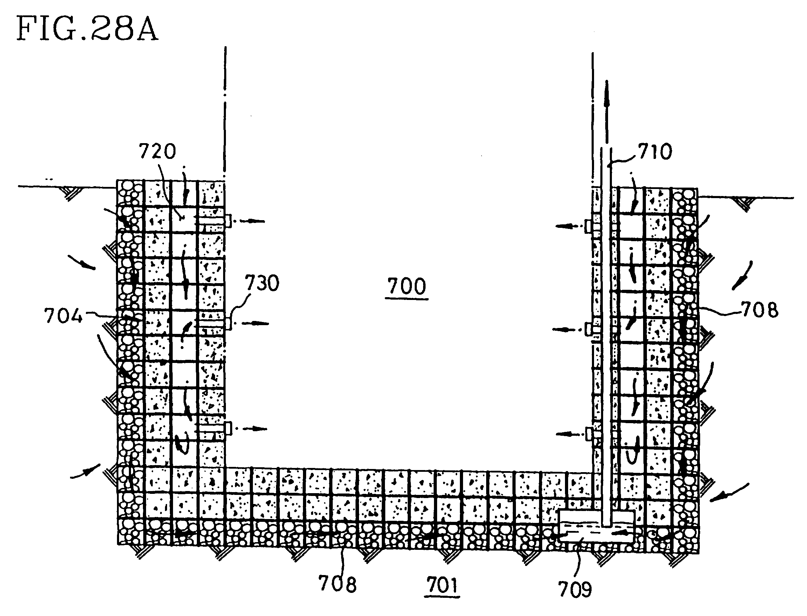

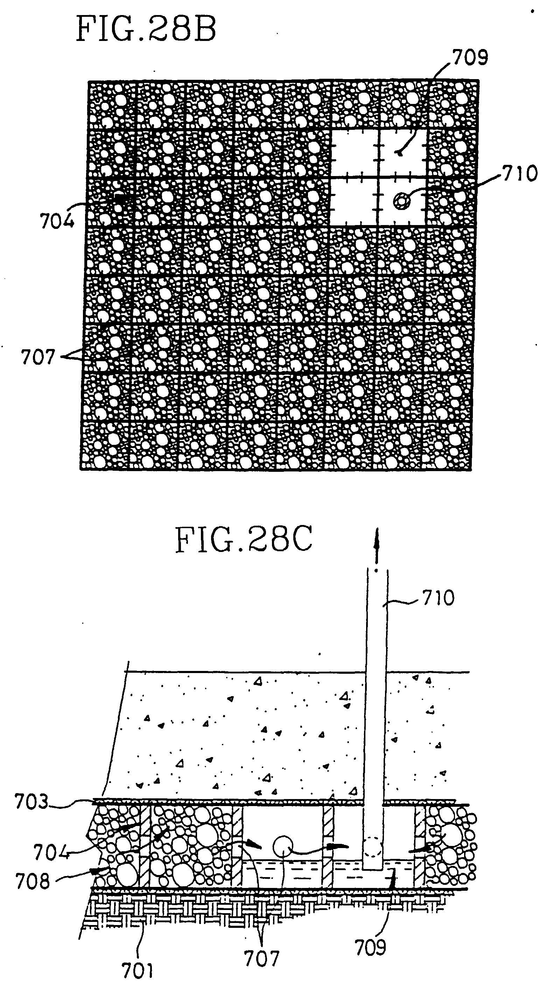

In the case of an underground structure illustrated in Fig. 28, a reinforced frames 704 are fabricated in plural rows at an inner side of an excavated underground 700, and an exterior reinforced frame 704 which contacts the earth and sane is filled with granular aggregates such as gravel and the like to thereby form a drain path 708, and the reinforced frame 704 is filled at an inner side thereof with concrete.

Here, the reinforced frame 704 consists of a basic plate or a connection plate with through holes 707 as illustrated in Fig. 28B, and can be formed with vertical intervals or through grooves. Meanwhile the drain path 708 may be connected to a water collecting well 709 as illustrated in Figs. 28A and 28B to thereby allow water to be discharged outside through a drain pipe 710.

The underground structure thus constructed is solidly connected by a reinforced frame 704, such that it is structurally stable and allows the underground water eluting from underground base via the drain path 708, thereby obtaining an effect of alleviating the soil pressure or water pressure applied to the underground structure.

Furthermore, in the case of the underground structure according to the present construction example, part of the cells in the reinforced frame 704 are disposed with vacant spaces to allow air or light to flow therebetween as ventilation paths or lighting paths, such that inner sides of underground structure can be ventilated or lighted.

The lighting paths can be arranged by installing optical fibers in the vacant spaces and flow of ventilation or lighting can be adjusted by opening and closing of an open/close apparatus at places where needs be.

The technical concept of vacant spaces in the underground structure can apply the same technical structure and effect even to the ground structures by allowing the ground structures to have the vacant spaces therein.

### (Construction example 8) roadbed structures such as road, railroad and the like

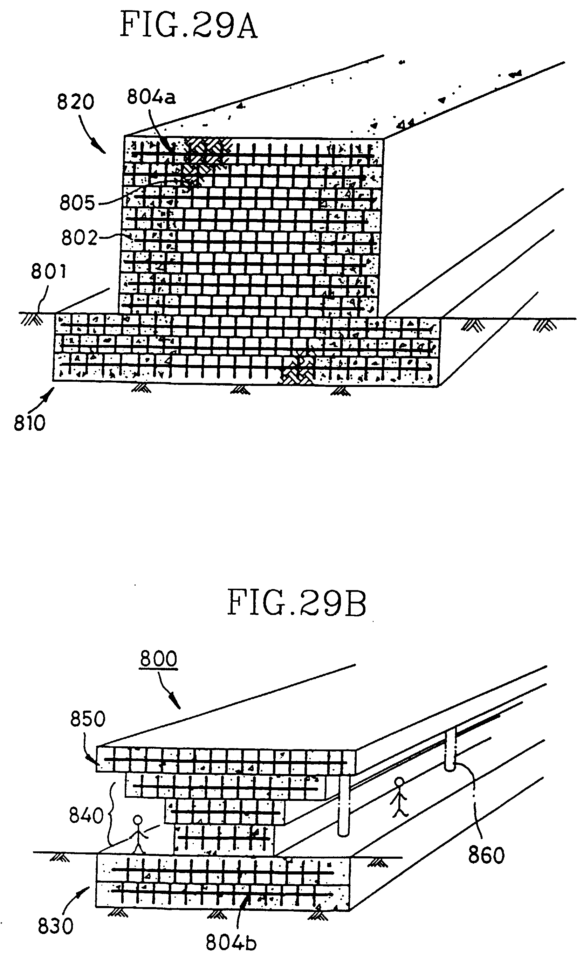

Figs. 29A and 29B are drawings for illustrating a construction example used to roadbed structures such as road, railroad and the like where a reinforced frame according to the present invention is applied.

The roadbed structure according to the present construction example is formed with, as illustrated in Fig. 29A, an underground structure 810 buried in a roadbed along a road direction and a ground structure 820 protruding to the ground, where the underground and ground structures are formed with the same width.

The reinforced frame 804a of the present invention comprising the underground structures and ground structures has each structure integrally connected and joined, where the reinforced frame is selectively filled therein with filling materials for maintaining a predetermined strength.

In the present construction example thus constructed, the respective structures are established with a relatively wide widths to thereby allow loads to be effectively dispersed through the reinforced frames 804s and 804b, such that the construction example is particularly applicable to roadbed structures such as weak ground and high speed railroad where supportive force is weak to the loads.

Furthermore, as illustrated in Fig. 29B, the roadbed structure includes a meddle structure 840 which is erected from a lower structure 830 to a predetermined height with the road width and with its width being widened step by step as it goes upward, and an upper structure 850 which is laid on the middle structure 840.

Here, the middle structure 840 and the upper structure 860 may be supported at fringes thereof by supportive pillars 860.

The reason the supportive pillars 860 are formed at the middle and upper structures 840 and 850 is to maximize the dispersing effect of load and vibration. Furthermore, there is another advantage in that a space formed by the middle structure 840 and the lower structure 830 can be used as a traffic road and availability of other spaces can be increased.

### (Construction example 9) piping structure

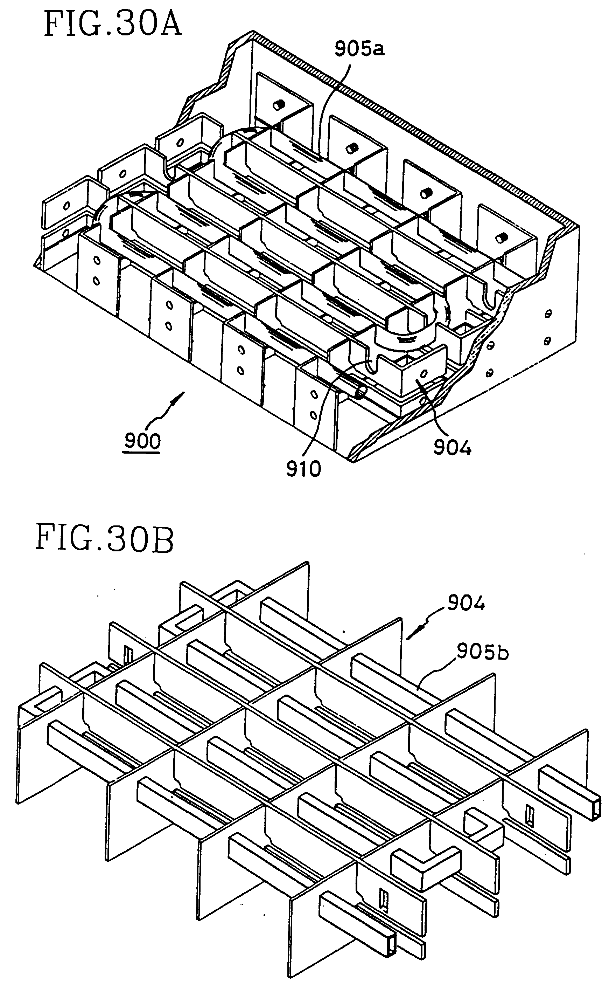

Fig. 30 is a perspective view for illustrating a construction example of piping structure utilizing a reinforced frame according to the present invention.

The piping structure according to the construction example is formed as a framework, as illustrated in Fig. 30, with a plurality of reinforced frames 904 formed with basic plates or connection plates having through holes, installation intervals or through grooves 910. The through holes, installation intervals or the through grooves 910 of the frameworks are fixed to a piping 905A and are filled therein with filling materials such cement, mortar and the like. Here, environment-friendly soils and sands such as yellow soil and the like may be utilized.

In the present construction example thus constructed, the pipings 905A are supported by the reinforced frame 904 to allow various loads applied from, an upper side thereof to be dispersed through the reinforced frame 904 and supported thereby, such that the pipings 905A are stably supported. There is another advantage in that heat generated from the pipings 905A is well preserved by independent structures of the reinforced frames 904 and is speedily propagated to the overall piping structures.

Meanwhile, the through holes, installation intervals or the through grooves are rectangularly formed as illustrated in Fig. 30A and pipings 905B inserted thereinto are also rectangularly formed in sections thereof, thereby expediting heat transfer due to wide contact area between the pipings 905B and the reinforced frame 904.

Furthermore, as illustrated in Fig. 30, it is advisable that the basic plate or the connection plate formed at an end of the reinforced frame 904 is formed with a fixed plate bent at right angle, directly fixed to the wall surface and separated form a floor slab to thereby present vibration or unnecessary load from being applied thereto.

### (Construction example 10) cushioning structure

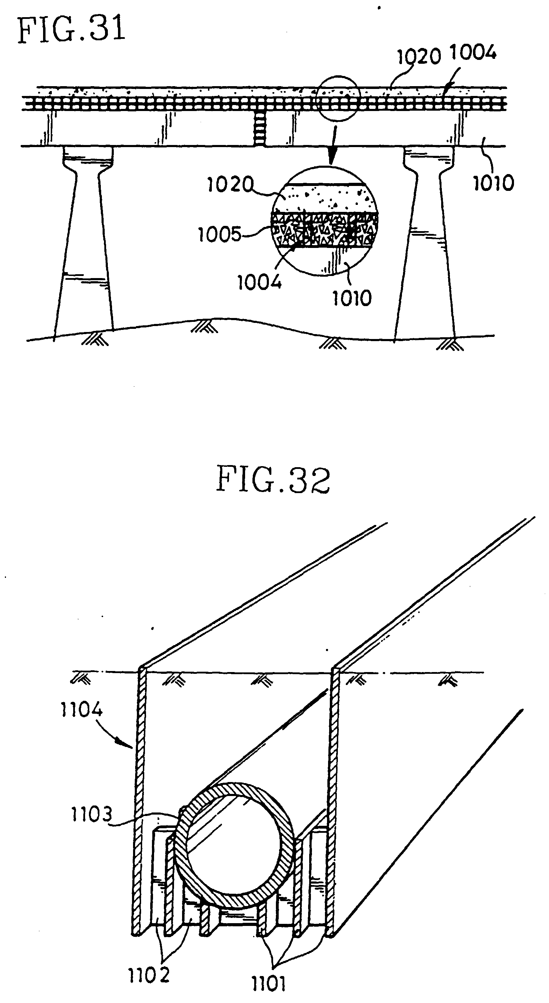

Fig. 31 is a construction example of a reinforced frame according to the present invention which is applied to a cushioning structure for cushioning vibration generated by transit load of a vehicle.

In the cushioning structure of the present invention, a reinforced frame 1004 is filled therein with cushioning filling materials 1005 such as sands, E.P.S., rubber and the like, and a paving layer 1020 is formed thereon for completion of the construction.

The cushioning structure thus constructed disperses the vibration or the transit load of a vehicle through the cushioning filling materials 1005, thereby reducing fatigue of bridge structure, increasing a durability of the bridge structure and decreasing maintenance and repair expenses.

### (Construction example 11) support structure for piped waterway

Fig. 32 is a schematic diagram for illustrating a construction example where a reinforced frame according to the present invention is used as a support structure for piped waterway.

In the case of the support structure for piped waterway, basic plates 1101 in the reinforced frame 1104, as illustrated in Fig. 32, are extended lengthwise along the piped waterway, each being distanced at a predetermined interval, and connection plates 1101 are connected at right angles to the basic plates 1101, where the basic plates 1101 have higher levels in peripheries thereof sectionwise and lower levels in another areas thereof.

Framework is laid therein with a pipe 1103 and soil and sand excavated from the spot are filled in to complete a support structure for piped waterway.

The support structure for piped waterway thus constructed is disposed underneath various piped waterways to supportively disperse various loads applied to the piped waterways to the whole structures, such that the piped waterways are prevented from being broken or irregularly sunk. Meanwhile, edges of the framework may be highly extended to a predetermined upper portion of the ground to enable and easy observation of burial positions of the piped waterways.

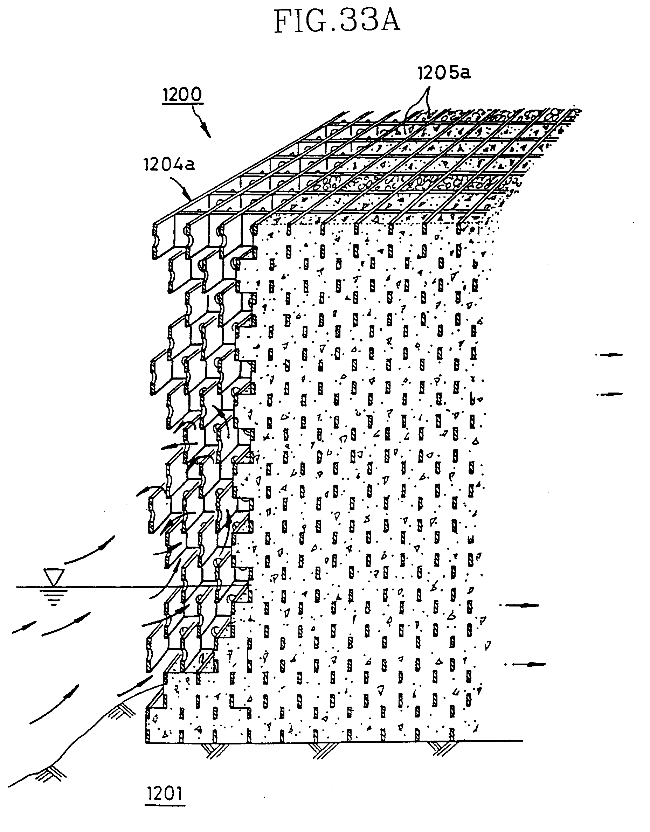

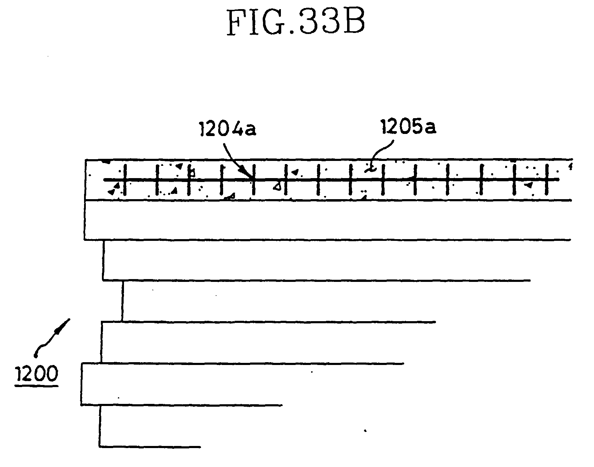

Fig. 33 is a schematic diagram for illustrating a construction example where a reinforced frame according to the present invention is applied to various embankment structures such as dams and the like.

In the embankment structure 1200 according to the present construction example, reinforced frames 1204a are stacked in multiple rows on a floor surface of the ground 1201 where the embankment structure is fabricated from a water level to a predetermined height, whereby an overall framework is formed through a stacking-up process of the reinforced frame 1204a where lower reinforced frames and upper reinforced frames are crossly arranged. The framework is fabricated by filling the filling materials into cells of the reinforced frames.

There is an advantage in the embankment structure thus constructed in that water hitting the framework is dispersed or discharged to every directions through cells of the reinforced frames 1204A even in the process of the overall frameworks being constructed or even after completion of the frameworks, such that the framework is prevented from being broken down due to water pressure concentrated to a predetermined portion thereof to thereby expedite easy construction of the framework.

There is another advantage in that filling materials 1205a can be filled into the framework after it is fabricated such that a transportation road may be obtained above the framework to make it easy for the filling materials to be filled thereinto. There is still another advantage in that the filling materials are not lost because they are filled into the prefabricated framework, thereby reducing overall construction expenses.

Meanwhile, a reinforced frame 1204a illustrated in Fig 33A is the same shape of reinforced frame shown in Fig. 12, where it is advisable that vertical through holes are vertically formed and vertical connection rods are vertically insertedly erected in the vertical through holes. These connection rods serve to solidly and mutually connect upper and lower reinforce frames.

Furthermore, there is an advantage in that a replacement to tearing off part of the reinforced frames from inside or outside thereof can be performed on the embankment structure, which is completed by filling of the filling materials 1205A into framework fabricated by reinforced frame thus described, thereby enabling an easy maintenance and repair.

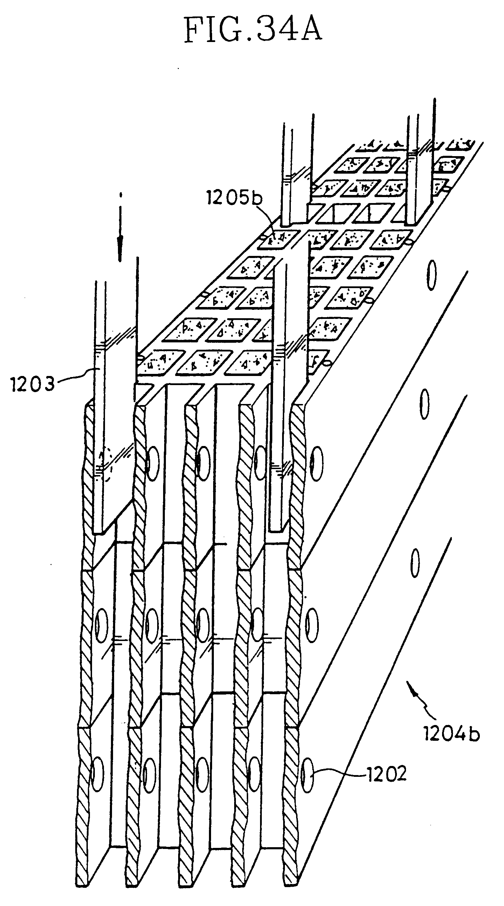

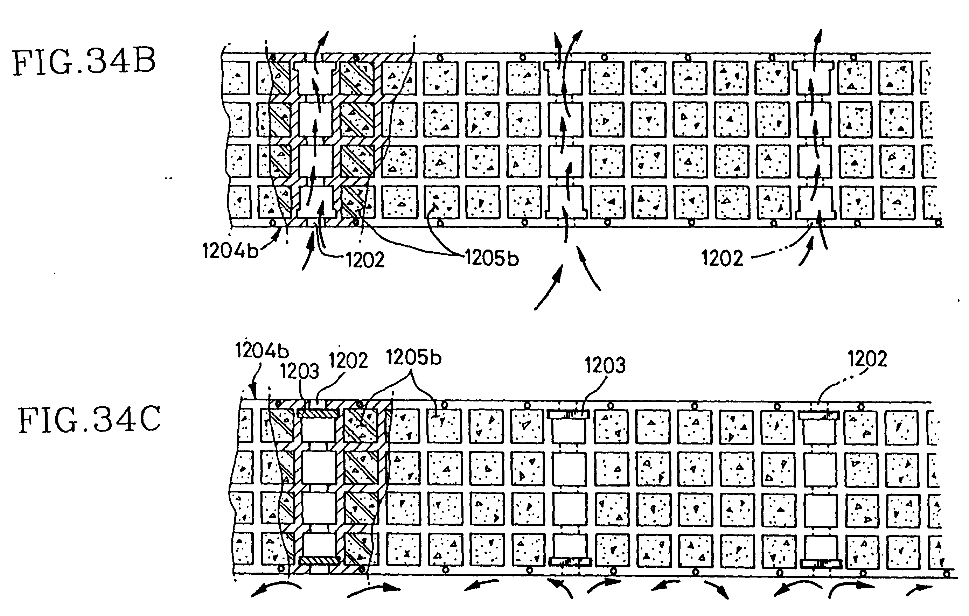

Still furthermore, waterway holes 1202 are formed at every interval of the reinforced frames in embankment structures shown in Figs. 34, 34A and 34B according to another construction example, to have a technical construction of being disposed with a watergate 1203 for opening and closing the waterway holes 1202.

In the construction of embankment structure thus described, when the reinforced frames 1204b are fabricated with the plurality of waterway holes 1202 being opened, as illustrated in Fig. 34A, and at the same time clogged cells are filled with filling materials 1205B, and installation works of the reinforced frames 1204b are completed across the whole sectional that are to be fabricated, the opened watergates 1203 at the waterway 1202 are selectively closed to cut off flow of the water, to thereby complete the works by way of filling the cells.

There is an advantage in the embankment structure having waterway holes 1202and watergates 1203 in that when the embankment structure is fabricated, the fabrication works can be performed while the waterway holes 1202 are opened, thereby dispersing water pressure or crushing pressure effectively to enable an easy construction of embankment structure.

### (Construction example 13) marine floating structure

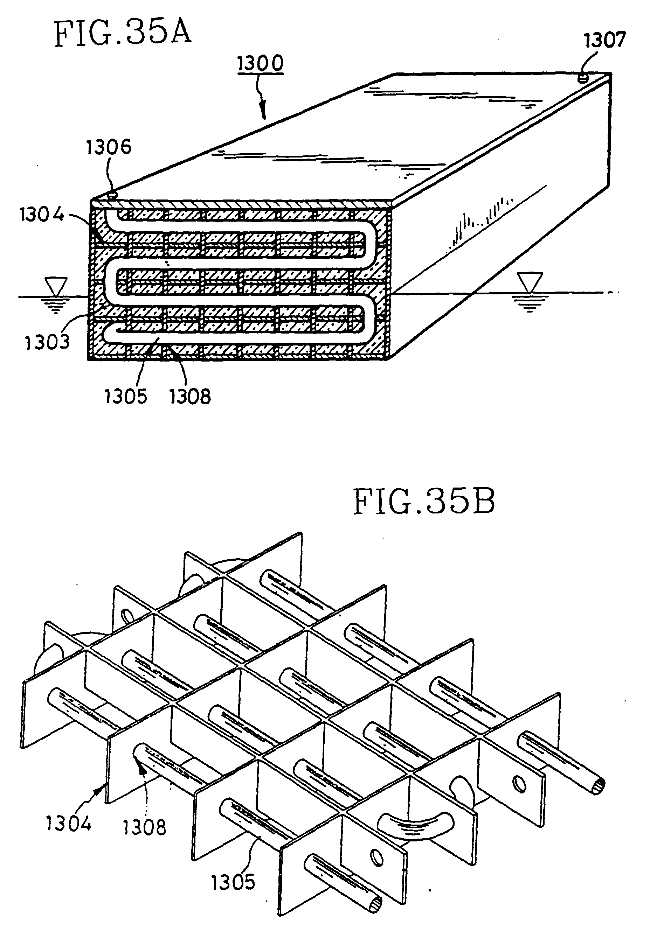

Fig. 35 is a schematic diagram for illustrating a construction example where a reinforced frame according to the present invention is applied to a marine floating structure.

The marine floating structure according to the present construction example forms a framework by stacking up in multiple layers multiple rows of reinforced frames 1304 where basic plates or connection plates are formed with through holes, installation intervals or through grooves, and the through holes, installation intervals or through grooves at the reinforced frames are fixed by floating body 1300.

The present construction example thus constructed rises to the surface according to buoyancy of the floating body 1300 and obtains an effect of securing a structurally stable upper plate according to the reinforced frame 1304. The floating body 1300 is therein constructed such that, as illustrated in Fig. 35A, air hose 1305 pierces the through hole 1308, separating interval or through grooves of the reinforced frame 1304 to thereafter be secured to the basic plate or connection plate.

At this time, it is advisable that inlet and outlet of the air hose 1305 are positioned at an upper area of the reinforced frame 1304, to thereby expedite an easy blow-in and blow-out of air into the out of the air hose 1305.

It is also advisable to form the floating body 1300 in such way where expandable synthetic resin 1303 is integrally filled and fixed into the reinforced frame 1304, as illustrated in Fig. 35.

### (Construction example 14) oil fence

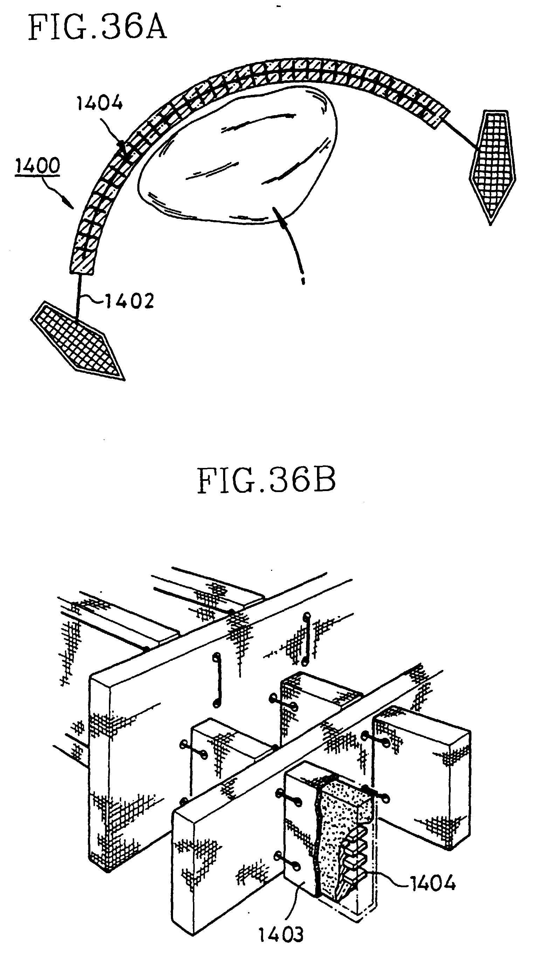

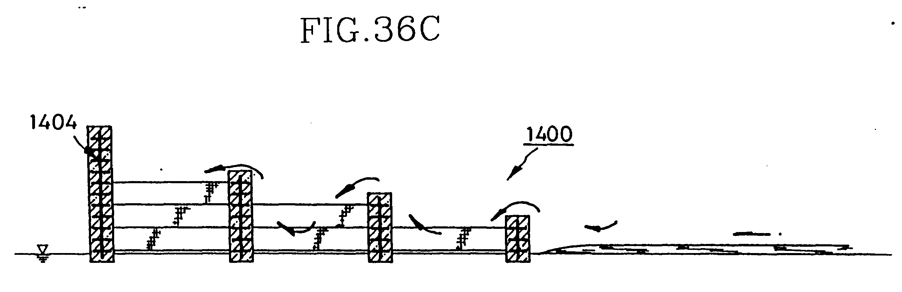

Fig. 36 is a schematic diagram for illustrating a construction example where a reinforced frame according to the present invention is applied to an oil fence. The oil fence 1400 according to the present construction example includes, as illustrated in Fig. 36A, a floating body having a reinforced frame comprising plural rows of basic plates and connection plates and a non-woven fabric 1403 attached to a cell of the reinforced frame 1404 and ropes connected both ends of the reinforced frame.

At this time, in the lengthwise basic plates, as illustrated in Fig. 36B, the floating body comprising plural rows of reinforced frames are formed in multi-stages, each at a predetermined interval and it is advisable to place a higher reinforced frame as it is positioned near to an outside where oil is leaked and to place a lower reinforced frame when it is positioned inside.

Furthermore, both ends of oil fence are connected to ropes 1402, where the reinforced frames 1404 comprises basic plates, connection plates and connection ropes for flexibility. The oil fence 1400 thus constructed is installed and used as a fence by being sent to a sea where oil is leaked from a ship due to a marine accident.

The oil fence 1400 serves to prevent the leaked oil from being further spread as the oil leaked from the ship is absorbed by non-woven fabric 1403 disposed at each cell when the oil passes from the inside to the outside. This is the reason why the basic plates are gradually higher outside where the oil is leaked and the basic plates are gradually lower inside in height thereof.

The oil fence 1400 thus constructed can be repeatedly used by replacing the non-woven fabric 1403 to effectively prevent spread of contaminated seas.

As apparent from the foregoing, it can be noted that the reinforced frame for structures according to the present invention can be applied to various areas. It should be also understood that the present invention is not to be limited to the specific embodiments but various other changes and modifications can be added without departing from the scope of the present invention as defined in the appended claims.

## Claims

**1.** A reinforced frame for structures comprising:
at least more than two basic plates including first holes through which first strings can pass;
connecting plates including second holes through which the first strings can pass, each being arranged at a predetermined interval between said basic plates; and
first strings passing through the first holes of said basic plates and the second holes of said connection plates for connecting said basic plates with said connection plates.

**2.** The reinforced frame for structures according to claim 1, wherein said connection plates are dually arranged up and down maintaining a predetermined interval thereamong.

**3.** The reinforced frame for structures according to claim 1, wherein said each basic plate is integrally formed so as to connect a plurality of said connection plates thereamong.

**4.** The reinforced frame for structures according to claim 1, wherein said basic plates comprise a plurality of divided unit plates including third holes through which the second strings can pass for connecting to a connection plate in an approximately middle portion of the unit plate; and
second strings for connecting said unit plates through said third holes.

**5.** A reinforced frame for structures comprising:
at least more than two basic plates composed of a flexible material and engaged with one another, each being at a predetermined interval; and
at least more than one extension members arranged within empty spaces formed between said basic plates and said connection plates for extending the basic plates from the longitudinal direction to the said direction by the tension force.

**6.** The reinforced frame for structures according to claim 5,wherein said extension member comprises:
a connection plate having holes through which the strings can pass; and
strings for connecting the connection plate to said basic plate.

**7.** The reinforced frame for structures according to claim 5, wherein said extension member comprises a string of a predetermined length which is fastened between the connection plates opposing to the basic plates.

**8.** A reinforced frame, the frame comprising:
at least more than two long basic plates having first connection grooves formed at a constant interval on the end of one side of the longitudinal direction; and
first connection plates being engaged with the first connection grooves in an approximately orthogonal direction against the longitudinal direction of said basic plates, wherein said basic plates and/or said connection plates have openings.

**9.** A reinforced frame for structure, the frame comprising:
at least more than long basic plates including first connection grooves, each being formed at a constant interval on the end of the said of the longitudinal direction, and second connection grooves, each being formed at a predetermined interval from the first connection grooves downward;
first connection plates being engaged with the first connection grooves in an approximately orthogonal direction against said basic plates; and
second plates being inserted and fastened to said second connection grooves, each being at a predetermined interval in the lower portion of said first connection plate.

**10.** The reinforced frame for structures according to claim 9, said basic plates and/or said connection plates have holes.

**11.** A reinforced frame for structures, the frame comprising:
at least more than two basic plates, each being extended longitudinally with a predetermined thickness, including connection grooves formed on both sides thereof, each being at a predetermined interval in the longitudinal direction; and
connection plates integrally forming engagement portions to be connected to the connection grooves on both sides thereof, wherein the engagement portions are connected to the connection grooves of said basic plates.

**12.** The reinforced frame for structures according to claim 11, wherein said basic plates further comprises a plurality of first holes for inserting connection rods thereinto when the plates are heaped up.

**13.** The reinforced frame for structures, according to claim 11 or 12, wherein said basic plates and/or said connection plates further include second holes passing through both ends of said basic plates and/or connection plates.

**14.** A reinforced frame for structures, the frame comprising:
at least more than one basic plates having connection grooves formed on both ends, each being at a predetermined interval along the longitudinal direction; and
connection members, each being engaged between connection grooves opposing to each other on the basic plate.

**15.** A reinforced frame for structures the frame comprising a plurality of cells, wherein said cells can be selectively adjusted in height thereof.

**15.** The reinforced frame for structures according to claim 15, wherein said plurality of cells are filled with different filling materials.

**16.** The reinforced frame for structures according to claim 15, wherein said plurality of cells are filled with different filling materials.

**17.** The reinforced frame for structures according to claim 16, wherein the structure is filled with filling materials in order to form predetermined spaces through the cells.

**18.** The reinforced frame for structures according to claim 17, wherein the structure is used for adjusting flow of air or light.

**19.** The reinforced frame for structures according to claim 15, wherein said cells have holes on their wall surfaces.

**20.** The reinforced frame for structures according to claim 15, wherein said structure forms a drain path being connected through the space of a predetermined cell and the holes made on the wall surface of the cell.

**21.** The reinforced frame for structures according to claim 15, wherein the filling materials are selectively filled in only some cells of the plurality of cells.

**22.** The reinforced frame for structures according to claim 15, further comprising an engagement device for connecting with other structures, wherein the engagement device is formed in one united body with the structure.

**23.** The reinforced frame for structures according to claim 19, wherein a drain member is arranged via said holes.

**24.** The reinforced frame for structures according to claim 19, wherein said structure is used for controlling the flow of water.

**25.** The reinforced frame for structures according to claim 24, wherein said flow of water is controlled by opening/closing the holes of said structure.

**26.** A method of using the reinforced frame for structures according to any one of claims 1 to 24 as an inside framework of a construction structure.

**27.** A method for using the reinforced frame for structures as a panel according to any one of claims 1 to 24, wherein cell spaces are filled with filling materials and then hardened.

**28.** The method according to claim 27, wherein various kinds of filling materials for a panel are simultaneously used.

**29.** The method according to claim 27, wherein said panel is in a state that predetermined cells are filled with filling materials and that the remaining portion to be connected with other structures is revealed.

**30.** The method according to claim 29, wherein said panel is used as a mould and formed in one untied body with the filling materials.

**31.** A construction method of a building structure using a reinforced frame for improving a weak ground, the method comprising the steps of:
forming a water-blocking curtain by installing a non-woven fabric mat at an upper area of the weak ground;
installing a reinforced frame formed with an opening a vertical interval or a through groove at a drain path above the non-woven fabric mat;
forming a water-piercing layer by filling water-penetrable granular aggregates into the reinforced frame; and
forming a soil layer above the water-piercing layer

**32.** A construction method of a building structure using a reinforced frame for improving a weak ground, the method comprising the steps of:
installing a non-woven fabric mat on a ground;
installing a reinforced frame formed with an opening, a vertical interval or a through groove on the non-woven fabric mat; and
mixing evenly soil and sand with solidifying process agent and horizontally pouring same into cells of the reinforced frame using a pump or other equipment to thereby form a solidified soil layer.

**33.** The method according to claim 32. Wherein the solidified soil layer is formed only on part of cells of the reinforced frame and other part of the cells of the reinforced frame are formed with draining layer filled with granular aggregates such as gravels and the like for ventilation and draining-out.

**34.** The method according to claim 32, wherein the reinforced frame is formed at a lower part thereof with a solidified soil layer and is formed at an upper part thereof with a drain layer filled with granular aggregates such as gravels and the like for ventilation and draining-out.

**35.** The method according to claim 32, wherein the reinforced frame is heap up in a two-tier layer and a lower layer of the reinforced frame is integrally formed with a solidified soil layer while an upper layer of the reinforced frame is formed with a draining layer.

**36.** A construction method of a building structure using a reinforced frame, the method comprising the steps of:
installing a non-woven fabric mat on a floor surface of a waste reclaimed land;
installing thereon a reinforced frame formed with an opening, vertical interval or a through groove; and
forming a water-blocking curtain layer in the reinforced frame to thereby fabricate a floor plate of a waste reclaimed land.

**37.** The method according to claim 36, wherein a reinforced framed is installed in a middle layer of buried wastes.

**38.** The method according to claim 36, wherein the floor plate is formed with a chaining layer filled with granular aggregates such as gravels and the like for water chaining on an upper area of the blocking curtain layer.

**39.** The method according to claim 36, wherein the reinforced frames are arranged in plural rows at front walls thereof, and part of which is integrally connected to the reinforced frame of the floor plate to thereby form a framework of the waste reclaimed land.

**40.** The method according to claim 39, wherein the reinforced frame is formed at an inner row of the front wall thereof with a drain path filled therein with granular aggregates such as gravels and the like.

**41.** The method according to any one of claims 38 to 40, wherein drain paths formed at the floor plate and front walls are connected to water collecting well formed on the floor plate, whereas the water collecting well is connected to a drain passage connection to the outside.

**42.** A construction method of a building structures using a reinforced frame, the method comprising the steps of:
fabricating a framework by erecting in plural rows reinforced frames formed with an opening, vertical interval or a through groove;
fabricating a retaining wall structure by filling granular aggregates such as gravels and the like in the reinforced frame which is located in the framework and connects the soil and sand.

**43.** The method according to claim 42, wherein the drain path is installed thereunder with a drainage and the drainage is connected to the outside via a drain passage.

**44.** A construction method of a building structure using a reinforced frame, the method comprising the steps of:
fabricating a retaining wall structure comprising an exterior structural wall erected at an extreme outside, a support structure erected at an inner side of the exterior structural wall at a predetermined space, and connecting means for connecting the exterior structural wall and the support structure.

**45.** The method according to claim 44, wherein the exterior structural wall is fabricated by erecting reinforced frames in plural rows to form a framework and forming a drain path by filling granular aggregates such as gravels and the like in the reinforced frames contacting the soil and sand, and filling other reinforced frames with filling materials.

**46.** The method according to claim 44, wherein the support structure is made of reinforced frames and anchored into the ground to thereby be supported.

**47.** The method according to claim 44, wherein the support structures have at least more than one thereof to be positional inside a disruption curve.

**48.** A construction method of a building structure using a reinforced frame, wherein a tunnel structure is fabricated by a method comprising the steps of:
fabricating a framework in a tunnel by erecting in plural rows reinforced frames formed with openings vertical intervals or through grooves;
forming a drain path by filling granular aggregates such gravels and the like in the reinforced frames contacting soil and sand; and
filling materials into remaining reinforced frames and installing a drainage underneath the drain path.

**49.** A construction method of a building structure using a reinforced frame, wherein an underground structure is fabricated by a method comprising the steps of:
fabricating a framework in an underground by erecting in plural rows reinforced frames formed with openings vertical intervals or through grooves;
forming a drain path by filling granular aggregates such gravels and the like in the reinforce frames contacting soil and sand; and
filling materials into remaining reinforced frames and installing a drainage underneath the drain path.

**50.** The method according to claim 49, wherein the drain path is connected to a water collecting well formed underneath an underground structure to thereafter be connected to the outside via a discharge pipe.

**51.** A construction method of a building structure using a reinforced frame, wherein a roadbed structure is fabricated by a method comprising the steps of:
forming a framework by heaping up to predetermined heights and widths reinforced frames formed with openings, vertical intervals or through grooves along a road of weak ground of railroad laying land; and
filling therein with filling materials such as gravels and the like.

**52.** A construction method of a building structure using a reinforced frame, wherein a roadbed structure comprises:
a lower structure buried in a predetermined road width along a road;
an intermediate structure vertically erected in a narrower width than the road width from the center of the lower structure to be gradually widened toward a top portion thereof; and
an upper structure having a corresponding width to the road width and being layed on an upper portion of the intermediate structure to thereby be supported, whereby frameworks of each structure are used as reinforced frames and interiors of which are filled with filling materials having predetermined strength after hardened.

**53.** The method according to claim 52, wherein the intermediate structure and upper structure are supported to the lower structure through support pillars.

**54.** A construction method of a building structure using a reinforced frame, wherein a piping structure is fabricated by a method comprising the steps of:
forming a framework by reinforced frames of plural rows formed with openings, vertical intervals or through grooves;
fixing pipings to the openings, vertical intervals or through grooves of the framework; and
filling therein with filling materials.

**55.** The method according to claim 54, wherein the openings or through grooves are rectangularly formed and pipings inserted thereinto are also shaped in rectangle in sections thereof.

**56.** The method according to claim 54, wherein basic plates or connection plates positioned at ends of the reinforced frame are formed with fixing plates bent at right angles, so as to be directly fixed to a wall surface.

**57.** A construction method of a building structure using a reinforced frame, wherein a cushioning structure is fabricated by a method comprising the steps of:
installing on a base layer of a road a reinforced frame formed with openings, vertical intervals or through grooves;
filling in the reinforced frame with cushioning filling materials; and
forming thereon a paving layer.

**58.** The method according to claim 57, wherein the cushioning filling materials are selected out of sands, E.P.S., or rubber.

**59.** A construction method of a building structure using a reinforced frame, wherein a piped waterway is fabricated by a method comprising the steps of:
extending basic plates along a piped waterway pit each t a predetermined interval;
connection plates to the basic plates at right angles, whereby the basic plates have higher peripheries in sections thereof and lower central portions; and
laying a pipe in a framework and filling soil and sand excavated from the spot to bury the piped waterway.

**60.** The method according to claim 59, wherein part of margins at peripheries of the framework are highly extended to a predetermined position.

**61.** A construction method of a building structure using a reinforced frame, wherein an embankment structure is fabricated by a method comprising the steps of:
forming an overall framework by stacking multi-rowed reinforced frames on a floor surface to a predetermined height where lower reinforced frame and upper reinforced frame are arranged in mutually opposing directions;
filling materials into from upper portion of the framework to cells of the reinforced frames.

**62.** The method according to claim 61, wherein the reinforced frame is formed with vertical through holes through which vertical connection rods are inserted to thereby fasten upper and lower reinforced frames.

**63.** A construction method of a building structure using a reinforced frame, wherein an embankment structure is fabricated by a method comprising the steps of:
forming waterway holes at every interval of stacked-up reinforced frames where watergates for opening and closing the waterway holes are incorporated;
effectively dispersing water pressure or destruction pressure by performing a fabricating construction of an embankment while the waterway holes are opened.

**64.** A construction method of a building structure using a reinforced frame, wherein a marine floating stature is fabricated by a method comprising the steps of:
forming a framework by plurally-rowed reinforced frames formed with opening, installation intervals or through grooves; and
fixing a floating body to the openings, installation intervals or through grooves of the framework.

**65.** The method according to claim 64, wherein the floating body is constructed such that an air hose pierces the openings, installation intervals or through grooves to thereafter be fixed to basic plates or connection plates, and is floated by air inserted thereinto.

**66.** The method according to claim 64, wherein the floating body is integrally formed by expanded synthetic resin filled into the reinforced frame.

**67.** A construction method of a building structure using a reinforced frame, wherein an oil fence is fabricated by a method comprising the steps of connecting a floating body composed of reinforced frames extensively having plurally-rowed basic plates and connection plates, a non-woven fabric releasably attached to cells of the reinforced frames and ropes disposed at both ends of the reinforced frames.

**68.** The method according to claim 67, wherein the floating body comprising the plurally-rowed reinforced frames are formed in multi-stages, each at a predetermined interval.

**69.** The method according to claim 67 or claim 68, wherein the floating body comprising the plurally-rowed reinforced frames are gradually lowered in height thereof toward the center thereof from outside of contaminated sea.
